# EUROPEAN PATENT APPLICATION

(11) **EP 4 827 220 A1**
(43) Date of publication of application: **21.10.2026**
(21) Application number: 24911256.6
(22) Date of filing: 25.12.2024
(51) Int. Cl.: H04W 72/543

(54) **COMMUNICATION METHOD AND APPARATUS**

(30) Priority: 29.12.2023 CN 202311864243
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN)
(74) Representative: Huawei European IPR
(86) International application number: PCT/CN2024/142390
(87) International publication number: WO 2025/140333

(57) **Abstract**

This application provides a communication method and apparatus, and relates to the field of wireless communication. In the method, a network node may send a first scheduling result and a first quality of service requirement to at least one compute node, receive first feedback information from the at least one compute node, and determine a second scheduling result based on the first feedback information. The first scheduling result may indicate a first manner according to which the at least one compute node performs a target task. The first feedback information may indicate that quality of service in performing the target task according to the first manner cannot meet the first quality of service requirement. The second scheduling result indicates a second manner according to which the at least one compute node performs the target task, and the second manner is different from the first manner. In the foregoing process, the network node may update the scheduling result of the target task in time based on the feedback of the at least one compute node, so that an updated scheduling result is more suitable for the compute node, to ensure quality of service of the target task and improve user experience.

## Description

This application claims priority to Chinese Patent Application No. 202311864243.5, filed with the China National Intellectual Property Administration on December 29, 2023 and entitled "COMMUNICATION METHOD AND APPARATUS", which is incorporated herein by reference in its entirety.

### TECHNICAL FIELD

This application relates to the field of wireless communication, and in particular, to a communication method and apparatus.

### BACKGROUND

In a communication system, a radio access network (radio access network, RAN) node may obtain a communication quality of service (quality of service, QoS) profile (QoS profile), and indicate the communication QoS profile to a terminal and an application server, so that the terminal and the application server determine a scheduling result of a target task corresponding to the communication QoS profile. Then, the terminal and the application server may perform the target task based on the scheduling result of the target task, to ensure data transmission quality. In the foregoing method, because the scheduling result of the target task is associated with the communication QoS profile, communication QoS can be ensured. Therefore, the foregoing method may be applied to a scenario in which a scheduling result of a target task has a requirement on communication QoS.

However, with development of communication technologies, communication scenarios become increasingly complex. In these communication scenarios, if only cases in which a scheduling result of a target task has a requirement on communication QoS are considered, the scheduling result of the target task is not suitable for the terminal or the application server, affecting quality of service of the entire task.

### SUMMARY

This application provides a communication method and apparatus, to determine a proper scheduling result for a target task, and ensure quality of service of the target task.

To achieve the foregoing objective, the following technical solutions are used in this application.

According to a first aspect, a communication method is provided. The method may be performed by a network node. The network node herein may be the network node, or may be a processor, a module, a logical node, a chip, a chip system, or the like that is in the network node and that implements the method.

The method includes: sending a first scheduling result and a first quality of service requirement to at least one compute node, where the first scheduling result indicates a first manner according to which the at least one compute node performs a target task; receiving first feedback information of the at least one compute node, where the first feedback information indicates that quality of service of the at least one compute node in performing the target task according to the first manner cannot meet the first quality of service requirement; and determining a second scheduling result based on the first feedback information, where the second scheduling result indicates a second manner according to which the at least one compute node performs the target task, and the second manner is different from the first manner.

Based on the method provided in the first aspect, the network node may send the first scheduling result and the first quality of service requirement to the at least one compute node, and adjust a scheduling policy of the target task with reference to the first feedback information sent by the at least one compute node, so that an adjusted scheduling result (for example, the second scheduling result) is more suitable for the compute node, to ensure quality of service of the target task and improve user experience. Optionally, computational power of the compute node (for example, an available compute resource of the compute node) usually changes dynamically. Therefore, the first quality of service requirement may be designed as quality of service related to computing. In this way, the network node may adjust the scheduling policy of the target task in time based on a change of the computational power of the at least one compute node, so that an adjusted scheduling result better conforms to an actual situation of the compute node, ensuring computing quality of service of the target task.

In a possible implementation, the method further includes: sending first condition information, where the first condition information indicates a condition for triggering the first feedback information.

Based on the foregoing possible implementation, a node that receives the first condition information (for example, the at least one compute node) may determine whether to send the first feedback information, or determine when to send the first feedback information.

In a possible implementation, the condition for triggering the first feedback information includes at least one of the following: the quality of service of the at least one compute node in performing the target task according to the first manner does not meet the first quality of service requirement; the quality of service of the at least one compute node in performing the target task according to the first manner does not meet the first quality of service requirement, and a deviation between the two is greater than or equal to a first threshold; or a feedback moment indicated by the first condition information arrives.

Based on the foregoing possible implementation, if the condition includes that the quality of service of the at least one compute node in performing the target task according to the first manner does not meet the first quality of service requirement, the at least one compute node may send the first feedback information to the network node when the quality of service in performing the target task according to the first manner does not meet the first quality of service requirement. If the condition includes that the quality of service of the at least one compute node in performing the target task according to the first manner does not meet the first quality of service requirement, and a deviation between the two is greater than or equal to a first threshold, the at least one compute node may send the first feedback information to the network node when the quality of service in performing the target task according to the first manner does not meet the first quality of service requirement and the deviation between the two is greater than or equal to the first threshold. If the condition includes that a feedback moment indicated by the first condition information arrives, the at least one compute node may send the first feedback information to the network node when the feedback moment indicated by the first condition information arrives.

In a possible implementation, the method further includes: determining the first quality of service requirement based on a computing quality of service requirement of the target task and computational power of the at least one compute node.

Based on the foregoing possible implementation, the network node may determine the first quality of service requirement based on the computing quality of service requirement of the target task and the computational power of the at least one compute node, so that the at least one compute node may determine computing quality of service that needs to be provided when the at least one compute node performs the target task according to the first manner.

In a possible implementation, the computing quality of service requirement of the target task or the first quality of service requirement indicates at least one of the following: a computing type requirement, a computing amount requirement, a computing delay requirement, a computing energy consumption requirement, or a computing accuracy requirement.

Based on the foregoing possible implementation, the at least one compute node may determine one or more of a computing type, a computing amount, a computing delay, computing energy consumption, or computing accuracy that is required for performing the target task according to the first manner.

In a possible implementation, the method further includes: sending a second quality of service requirement to a communication node; and receiving second feedback information from the communication node, where the second feedback information indicates that quality of service provided by the communication node cannot meet the second quality of service requirement; and the determining the second scheduling result based on the first feedback information includes: determining the second scheduling result based on the first feedback information and the second feedback information.

Based on the foregoing possible implementation, the network node may send the second quality of service requirement to the communication node, and adjust the scheduling policy of the target task with reference to the first feedback information sent by the at least one compute node and the second feedback information sent by the communication node, so that an adjusted scheduling result (for example, the second scheduling result) is more suitable for the compute node and the communication node, to ensure quality of service of the target task and improve user experience. Optionally, as a channel state usually changes dynamically, the quality of service provided by the communication node also changes dynamically. Therefore, the second quality of service requirement may be designed as quality of service related to communication. In this way, the network node may further adjust the scheduling policy of the target task in time with reference to a change of the quality of service provided by the communication node, so that an adjusted scheduling result better conforms to an actual situation of the communication node, ensuring communication quality of service of the target task.

In a possible implementation, the method further includes: sending second condition information, where the second condition information indicates a condition for triggering the second feedback information.

Based on the foregoing possible implementation, a node that receives the second condition information, for example, the communication node, may determine whether to send the second feedback information, or determine when to send the second feedback information.

In a possible implementation, the condition for triggering the second feedback information includes at least one of the following: the quality of service provided by the communication node cannot meet the second quality of service requirement; the quality of service provided by the communication node cannot meet the second quality of service requirement, and a deviation between the two is greater than or equal to a second threshold; or a feedback moment indicated by the second condition information arrives.

Based on the foregoing possible implementation, if the condition includes that the quality of service provided by the communication node cannot meet the second quality of service requirement, the communication node may send the second feedback information to the network node when the provided quality of service cannot meet the second quality of service requirement. If the foregoing condition includes that the quality of service provided by the communication node cannot meet the second quality of service requirement, and a deviation between the two is greater than or equal to a second threshold, the communication node may send the second feedback information to the network node when the provided quality of service cannot meet the second quality of service requirement and the deviation between the two is greater than or equal to the second threshold. If the condition includes that a feedback moment indicated by the second condition information arrives, the communication node may send the second feedback information to the network node when the feedback moment indicated by the second condition information arrives.

In a possible implementation, the method further includes: determining the second quality of service requirement based on a network status and a communication quality of service requirement of the target task.

Based on the foregoing possible implementation, the network node may determine the second quality of service requirement based on the network status and the communication quality of service requirement of the target task, so that the communication node may determine communication quality of service that needs to be provided by the communication node.

In a possible implementation, the communication quality of service requirement of the target task or the second quality of service requirement indicates at least one of the following: a packet delay budget, a guaranteed bit rate, a guaranteed flow bit rate, a maximum data burst volume, a packet error rate, or a guaranteed transmitted data volume.

Based on the foregoing possible implementation, the communication node may determine one or more of a packet delay budget, a guaranteed bit rate, a guaranteed flow bit rate, a maximum data burst volume, a packet error rate, or a guaranteed transmitted data volume that needs to be provided by the communication node.

In a possible implementation, the method further includes: obtaining a network status, a quality of service requirement of the target task, and the computational power of the at least one compute node, where the quality of service requirement of the target task includes the communication quality of service requirement of the target task and the computing quality of service requirement of the target task; and determining the first scheduling result based on the network status, the quality of service requirement of the target task, and the computational power of the at least one compute node.

Based on the foregoing possible implementation, the network node may determine the first scheduling result based on the network status, the quality of service requirement of the target task, and the computational power of the at least one compute node, so that the communication node may provide corresponding communication quality of service for the target task, the at least one compute node may provide corresponding computing quality of service for the target task, and the communication quality of service and the computing quality of service meet the quality of service requirement of the target task.

In a possible implementation, the obtaining the quality of service requirement of the target task includes: receiving a computing service request, where the computing service request includes quality of service requirement information of the target task.

Based on the foregoing possible implementation, the network node may obtain the quality of service requirement of the target task from the computing service request.

In a possible implementation, the obtaining the quality of service requirement of the target task includes: receiving a computing service request, where the computing service request includes a service identifier corresponding to the target task; and obtaining the quality of service requirement of the target task based on the service identifier.

Based on the foregoing possible implementation, the network node may obtain the service identifier from the computing service request, and obtain the quality of service requirement of the target task based on the service identifier. For example, the network node may obtain the quality of service requirement of the target task from a core network based on the service identifier.

In a possible implementation, the method further includes: sending the second scheduling result.

Based on the foregoing possible implementation, a compute node that receives the second scheduling result may be caused to perform the target task based on the second scheduling result.

In a possible implementation, the method is applied to a radio access network node, a central unit, a distributed unit, a radio access network intelligent controller, or a core network element.

Based on the foregoing possible implementation, the radio access network node, the central unit, the distributed unit, the radio access network intelligent controller, or the core network element may perform the method provided in the first aspect, improving flexibility and diversity of devices deployed according to the method provided in the first aspect.

In a possible implementation, the first manner indicates the at least one compute node to perform a first subtask in the target task, and the second manner indicates the at least one compute node to perform a second subtask in the target task.

Based on the foregoing possible implementation, before and after the scheduling policy of the target task is adjusted, the at least one compute node may perform different subtasks, to provide corresponding quality of service.

According to a second aspect, a communication method is provided. The method may be performed by a compute node. The compute node herein may be the compute node, or may be a processor, a module, a logical node, a chip, a chip system, or the like that is in the compute node and that implements the method.

The method includes: receiving a first scheduling result and a first quality of service requirement, where the first scheduling result indicates a first manner according to which at least one compute node performs a target task; performing the target task according to the first manner; and sending first feedback information, where the first feedback information indicates that quality of service in performing the target task according to the first manner cannot meet the first quality of service requirement.

Based on the method provided in the second aspect, the compute node may send the first feedback information, to indicate that the quality of service in performing the target task according to the first manner cannot meet the first quality of service requirement, so that a node that receives the first feedback information, for example, a network node, adjusts a scheduling policy of the target task based on the first feedback information.

In a possible implementation, the method further includes: receiving first condition information, where the first condition information indicates a condition for triggering the first feedback information.

Based on the foregoing possible implementation, the compute node may determine, based on the first condition information, whether to send the first feedback information, or determine when to send the first feedback information.

In a possible implementation, the condition for triggering the first feedback information includes at least one of the following: the quality of service in performing the target task according to the first manner does not meet the first quality of service requirement; the quality of service in performing the target task according to the first manner does not meet the first quality of service requirement, and a deviation between the two is greater than or equal to a first threshold; or a feedback moment indicated by the first condition information arrives.

Based on the foregoing possible implementation, if the condition includes that the quality of service in performing the target task according to the first manner does not meet the first quality of service requirement, the compute node may send the first feedback information to the network node when the quality of service in performing the target task according to the first manner does not meet the first quality of service requirement. If the condition includes that the quality of service in performing the target task according to the first manner does not meet the first quality of service requirement, and a deviation between the two is greater than or equal to a first threshold, the compute node may send the first feedback information to the network node when the quality of service in performing the target task according to the first manner does not meet the first quality of service requirement and the deviation between the two is greater than or equal to the first threshold. If the condition includes that a feedback moment indicated by the first condition information arrives, the compute node may send the first feedback information to the network node when the feedback moment indicated by the first condition information arrives.

In a possible implementation, the first quality of service requirement indicates at least one of the following: a computing type requirement, a computing amount requirement, a computing delay requirement, a computing energy consumption requirement, or a computing accuracy requirement.

Based on the foregoing possible implementation, the compute node may determine one or more of a computing type, a computing amount, a computing delay, computing energy consumption, or computing accuracy that is required for performing the target task according to the first manner.

In a possible implementation, the method further includes: sending a computing service request, where the computing service request includes at least one of quality of service requirement information of the target task or a service identifier corresponding to the target task.

Based on the foregoing possible implementation, a node that receives the computing service request, for example, the network node, may obtain the quality of service requirement of the target task, or obtain the service identifier corresponding to the target task, to obtain the quality of service requirement of the target task based on the service identifier.

In a possible implementation, the method further includes: receiving a second scheduling result, where the second scheduling result indicates a second manner according to which the at least one compute node performs the target task, and the second manner is different from the first manner; and performing the target task based on the second scheduling result.

Based on the foregoing possible implementation, the compute node may receive the second scheduling result, and perform the target task based on the second scheduling result.

In a possible implementation, the first manner indicates the at least one compute node to perform a first subtask in the target task, and the second manner indicates the at least one compute node to perform a second subtask in the target task.

Based on the foregoing possible implementation, before and after the scheduling policy of the target task is adjusted, the compute node may perform different subtasks, to provide corresponding quality of service.

According to a third aspect, a communication apparatus is provided, to implement the foregoing method. The communication apparatus may be the network node in the first aspect, or the communication apparatus may be the compute node in the second aspect. The communication apparatus includes a corresponding module, unit, or means (means) for implementing the foregoing methods. The module, unit, or means may be implemented by hardware, software, or hardware executing corresponding software. The hardware or the software includes one or more modules or units corresponding to the foregoing functions.

With reference to the third aspect, in a possible implementation, the communication apparatus may include an interface module and a processing module. The interface module may also be referred to as an interface unit, and is configured to implement a sending function and/or a receiving function in any one of the foregoing aspects and any possible implementation of the foregoing aspects. The interface module may include an interface circuit, a transceiver machine, a transceiver, or a communication interface. The processing module may be configured to implement a processing function in any one of the foregoing aspects and any possible implementation of the foregoing aspects. The processing module may be, for example, a processor.

With reference to the third aspect, in a possible implementation, the interface module includes a sending module and a receiving module that are respectively configured to implement the sending and receiving functions in any one of the foregoing aspects and any possible implementation of the foregoing aspects.

According to a fourth aspect, a communication apparatus is provided, including a processor. The processor is configured to be coupled to a memory, and after reading an instruction in the memory, perform the method according to any one of the foregoing aspects based on the instruction. The communication apparatus may be the network node in the first aspect, or the communication apparatus may be the compute node in the second aspect.

With reference to the fourth aspect, in a possible implementation, the communication apparatus further includes a memory. The memory is configured to store program instructions and data. Optionally, the memory and the processor are integrated together, or the memory is independent of the processor.

With reference to the fourth aspect, in a possible implementation, the processor and/or the memory further includes an artificial intelligence (artificial intelligence, AI) module, configured to implement an AI-related function. The AI module may implement an AI function by using software, hardware, or a combination of software and hardware. For example, the AI module includes a radio access network (radio access network, RAN) intelligent controller (RAN intelligent controller, RIC) module.

With reference to the fourth aspect, in a possible implementation, the communication apparatus is a chip or a chip system. Optionally, when the communication apparatus is a chip system, the communication apparatus may include a chip, or may include a chip and another discrete component.

According to a fifth aspect, a communication apparatus is provided, including a processor and an interface circuit. The interface circuit is configured to receive a computer program or instructions, and transmit the computer program or the instructions to the processor. The processor is configured to execute the computer program or the instructions, to cause the communication apparatus to perform the method according to any one of the foregoing aspects. The communication apparatus may be the network node in the first aspect, or the communication apparatus may be the compute node in the second aspect.

With reference to the fifth aspect, in a possible implementation, the processor further includes an AI module, configured to implement an AI-related function. The AI module may implement an AI function by using software, hardware, or a combination of software and hardware. For example, the AI module includes an RIC module.

With reference to the fifth aspect, in a possible implementation, the communication apparatus is a chip or a chip system. Optionally, when the communication apparatus is a chip system, the communication apparatus may include a chip, or may include a chip and another discrete component.

According to a sixth aspect, a computer-readable storage medium is provided. The computer-readable storage medium stores instructions, and when the instructions are run on a computer, the computer is caused to perform the method according to any one of the foregoing aspects.

According to a seventh aspect, a computer program product including instructions is provided. When the computer program product runs on a computer, the computer is caused to perform the method according to any one of the foregoing aspects.

According to an eighth aspect, a communication system is provided. The communication system includes the network node configured to perform the method according to the first aspect, and the compute node configured to perform the method according to the second aspect.

With reference to the eighth aspect, in a possible implementation, the communication system further includes a communication node. The network node is further configured to send a second quality of service requirement to the communication node, and receive second feedback information from the communication node. The second feedback information may indicate that quality of service provided by the communication node cannot meet the second quality of service requirement, and the second feedback information may be used to determine a second scheduling result. The communication node is configured to receive the second quality of service requirement from the network node, and send second feedback information.

For technical effects achieved by any possible implementation of the third aspect to the eighth aspect, refer to technical effects achieved by any one of the first aspect, the second aspect, or different possible implementations of the first aspect or the second aspect. Details are not described herein again.

It may be understood that the solutions in the foregoing aspects may be combined if the solutions are not contradictory.

### BRIEF DESCRIPTION OF DRAWINGS

FIG. 1A is a diagram of downlink data transmission between layers according to this application;
FIG. 1B is a diagram of a central unit (central unit, CU) and a distributed unit (distributed unit, DU) according to this application;
FIG. 1C is a diagram 1 of a RAN node according to this application;
FIG. 1D is a diagram 2 of a RAN node according to this application;
FIG. 1E is a diagram 3 of a RAN node according to this application;
FIG. 1F is a diagram of a task according to this application;
FIG. 1G is a diagram of device-cloud collaboration of a virtual reality (virtual reality, VR) task according to this application;
FIG. 1H is a diagram of a deep neural network (deep neural network, DNN) model according to this application;
FIG. 2 is a diagram of an architecture of a communication system according to this application;
FIG. 3A is a diagram 1 of a deployment manner of a network node according to this application;
FIG. 3B is a diagram 2 of a deployment manner of a network node according to this application;
FIG. 3C is a diagram 3 of a deployment manner of a network node according to this application;
FIG. 3D is a diagram 4 of a deployment manner of a network node according to this application;
FIG. 3E is a diagram 5 of a deployment manner of a network node according to this application;
FIG. 4 is a diagram of a hardware structure of a communication apparatus according to this application;
FIG. 5 is a schematic flowchart 1 of a communication method according to this application;
FIG. 6 is a schematic flowchart 2 of a communication method according to this application; and
FIG. 7 is a diagram of a structure of a communication apparatus according to this application.

### DESCRIPTION OF EMBODIMENTS

Before technical solutions of this application are described, related technical terms in this application are described. It may be understood that the descriptions are intended to make this application easier to understand, but should not be construed as a limitation on the protection scope claimed in this application.

### 1. Terminal

The terminal in this application is a device with a wireless transceiver function and a computing function. The terminal may be deployed on land, including indoor, outdoor, handheld, or vehicle-mounted; may be deployed on water (for example, on a ship); or may be deployed in the air (for example, on an airplane, a balloon, and a satellite). The terminal may also be referred to as a terminal device. The terminal device may be user equipment (user equipment, UE). The UE includes a handheld device, a vehicle-mounted device, a wearable device, or a compute device having a wireless communication function. For example, the UE may be a mobile phone (mobile phone), a tablet computer, or a computer having a wireless transceiver function. Alternatively, the terminal device may be a VR terminal device, an augmented reality (augmented reality, AR) terminal device, a wireless terminal in industrial control, a wireless terminal in self-driving, a wireless terminal in telemedicine, a wireless terminal in smart grid, a wireless terminal in smart city (smart city), a wireless terminal in smart home (smart home), or the like.

By way of example rather than limitation, the terminal in this application may be a wearable device. The wearable device may also be referred to as a wearable intelligent device, and is a general term of wearable devices that are intelligently designed and developed for daily wear by using wearable technologies, for example, glasses, gloves, a watch, clothing, and shoes. The wearable device is a portable device that can be directly worn on the body or integrated into clothes or an accessory of a user. For example, the wearable device is not only a hardware device, but also a device that implements a powerful function through software support, data exchange, and cloud interaction. In a broad sense, wearable intelligent devices include full-featured and large-sized devices that can implement all or some functions without depending on smartphones, for example, smartwatches or smart glasses, and include devices that are dedicated to only one type of application function and need to collaboratively work with other devices such as smartphones, for example, various smart bands or smart jewelry for monitoring physical signs.

In this application, the terminal may alternatively be a terminal in an internet of things (internet of things, IoT) system. IoT is an important part of future information technology development. A main technical feature of the IoT is to connect an object to a network by using a communication technology, to implement an intelligent network of human-computer interconnection and thing-to-thing interconnection. The terminal in this application may be a terminal in machine type communication (machine type communication, MTC). The terminal in this application may be a vehicle-mounted module, a vehicle-mounted component, an onboard component, a vehicle-mounted chip, or a vehicle-mounted unit that is built in a vehicle as one or more components or units. The vehicle uses the vehicle-mounted module, the vehicle-mounted component, the onboard component, the vehicle-mounted chip, or the vehicle-mounted unit that is built in the vehicle, to implement the method in this application.

### 2. RAN node

The RAN node in this application may be any device with a wireless transceiver function, and may provide a wireless access service for a terminal. Optionally, the RAN node may further have a computing capability. The RAN node may include but is not limited to an evolved NodeB (NodeB or eNB or e-NodeB, evolved NodeB) in long term evolution (long term evolution, LTE), an evolved NodeB (next-generation eNB, ng-eNB) in next-generation LTE, a gNodeB (gNodeB or gNB) or a transmission reception point (transmission receiving point/transmission reception point, TRP) in new radio (new radio, NR), a future evolved base station of the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a pico base station, a small cell, a relay station, a balloon station, or the like. Multiple base stations may support networks of a same technology mentioned above, or may support networks of different technologies mentioned above. The base station may include one or more co-site or non-co-site TRPs. The RAN node may alternatively be at least one of a radio controller, a CU, a DU, a central unit control plane (CU control plane, CU-CP) node, a central unit user plane (CU user plane, CU-UP) node, a baseband processing unit (baseband unit, BBU), a remote radio unit (remote radio unit, RRU), or the like in a cloud radio access network (cloud radio access network, CRAN) scenario. An example in which the RAN node is a base station is used below for description. Multiple RAN nodes may be base stations of a same type, or may be base stations of different types. The base station may communicate with a terminal, or may communicate with the terminal through a relay station. The terminal may communicate with multiple base stations using different technologies. For example, the terminal may communicate with a base station supporting an LTE network, or may communicate with a base station supporting a 5G network, or may support dual connectivity to a base station in an LTE network and a base station in a 5G network.

In this application, the CU and the DU may be separately disposed, or may be included in a same network element, for example, a BBU. The RU may be included in a radio frequency device or a radio frequency unit, for example, included in an RRU, an active antenna unit (active antenna unit, AAU), or a remote radio head (remote radio head, RRH). It may be understood that the CU may be classified as a network device in an access network, or the CU may be classified as a network device in a core network. This is not limited herein.

In different systems, the CU (or the CU-CP and the CU-UP), the DU, or the RU may alternatively have different names, but a person skilled in the art may understand meanings thereof. For example, in an open radio access network (open radio access network, ORAN) system, the CU may alternatively be referred to as an O-CU (open CU), the DU may alternatively be referred to as an O-DU, the CU-CP may alternatively be referred to as an O-CU-CP, the CU-UP may alternatively be referred to as an O-CU-UP, and the RU may alternatively be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

### 3. Protocol layer

In this application, a terminal and a RAN node may communicate with each other through a protocol layer. The protocol layer may include a control plane (control panel, CP) protocol layer and a user plane (user panel, UP) protocol layer. The control plane protocol layer may include a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, and other protocol layers. The user plane protocol layer may include a PDCP layer, an RLC layer, a MAC layer, a physical layer, and other protocol layers. Optionally, for the user plane protocol layer, a service data adaptation protocol (service data adaptation protocol, SDAP) layer may be further included above the PDCP layer.

The user plane protocol layer is used below as an example for description. User plane data between the RAN node and the terminal may pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Based on a transmission direction of the user plane data, each layer is further divided into a sending part and a receiving part. Downlink data transmission is used below as an example for description.

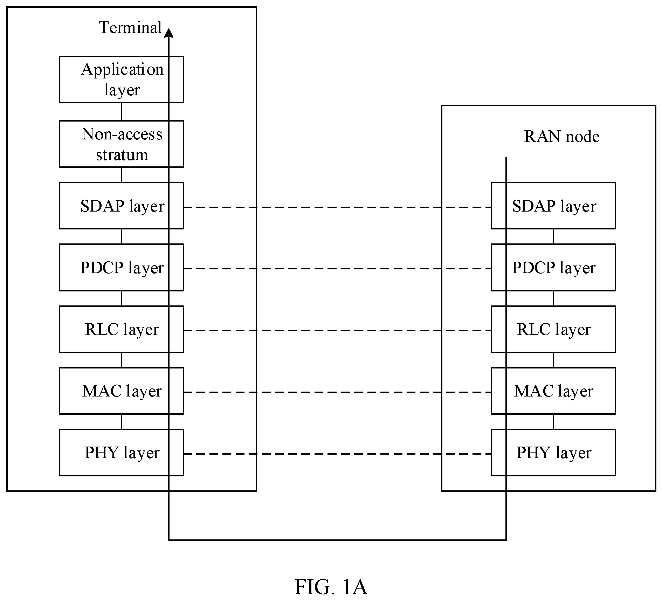

FIG. 1A is a diagram of downlink data transmission between layers. An arrow in FIG. 1A indicates a transmission direction of the downlink data. To be specific, after obtaining the downlink data from an upper layer, an SDAP layer of the RAN node sequentially transmits the downlink data to a PDCP layer, an RLC layer, and a MAC layer, then the MAC layer generates a transport block (transport block, TB), and then wireless transmission is performed through a physical layer, to transmit the transport block to a physical layer of the terminal. Subsequently, the physical layer of the terminal delivers the downlink data to an upper layer. It can be understood that data may be correspondingly encapsulated at each layer. For example, data received by a layer from an upper layer of the layer is considered as a service data unit (service data unit, SDU) of the layer and is encapsulated by the layer into a protocol data unit (protocol data unit, PDU), and then the protocol data unit is transmitted to a next layer.

Optionally, in addition to the access stratum, a protocol layer of the terminal further includes an application layer (app layer) and a non-access stratum (non-access stratum, NAS). The non-access stratum may be used to forward user data, for example, forward uplink data received from the application layer to the SDAP layer, or forward downlink data received from the SDAP layer to the application layer. The application layer may be used to provide a service for an application program installed on the terminal. For example, the downlink data received by the terminal may be delivered by the physical layer to an upper layer, to reach the application layer, and the application layer provides the downlink data for the application program. For another example, the application layer may obtain data generated by an application program, and deliver the data to a lower layer, to reach the physical layer, and the data is sent to another communication apparatus through the physical layer.

### 4. CU and DU

As described above, the RAN node may include a CU and a DU. In other words, functions of the RAN node may be split. Some functions of the RAN node are deployed on the CU, and remaining functions of the RAN node are deployed on the DU. Signaling generated by the CU may be sent to a terminal through the DU, or signaling generated by a terminal may be sent to the CU through the DU.

A quantity of CUs or DUs included in the RAN node is not limited in this application. For example, the RAN node may include one CU and multiple DUs. The multiple DUs may be controlled by one CU in a centralized manner. An interface between the CU and the DU may be referred to as an F1 interface. The interface between the CU and DU can be further classified into a control plane interface (F1-C) and a user plane interface (F1-U).

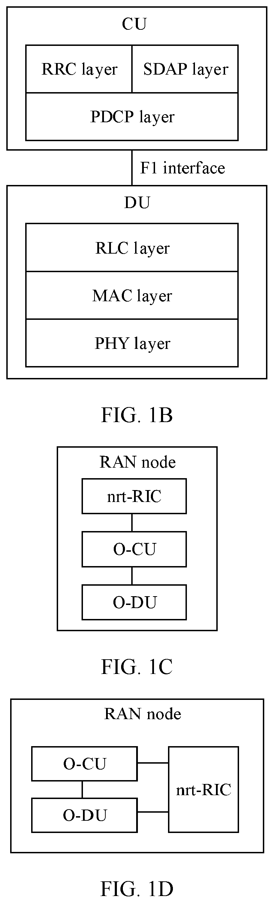

In some embodiments, the CU and the DU may be obtained through division based on protocol layers of a wireless network. For example, a PDCP layer and a protocol layer above the PDCP layer are deployed on the CU, and a protocol layer below the PDCP layer is deployed on the DU. Specifically, refer to FIG. 1B. It should be understood that FIG. 1B is merely an example of division into the CU and the CU based on protocol layers. During specific application, there may alternatively be another division form. This is not limited.

In some embodiments, the CU may be further split into a CU-CP node and a CU-UP node, and the CU-CP node and the CU-UP node may be coupled to the DU to jointly perform a function of the RAN node.

### 5. RAN intelligent controller (RAN intelligent controller, RIC)

In an ORAN architecture, a RAN node includes an RIC (for example, near-real-time RIC (near-real-time RIC, nrt-RIC)), an O-CU, and an O-DU. To be specific, functions of the RAN node may be split, and the functions of the RAN node are separately deployed on the RIC, the O-CU, and the O-DU. For example, in the ORAN architecture, the RAN node may be shown in FIG. 1C or FIG. 1D.

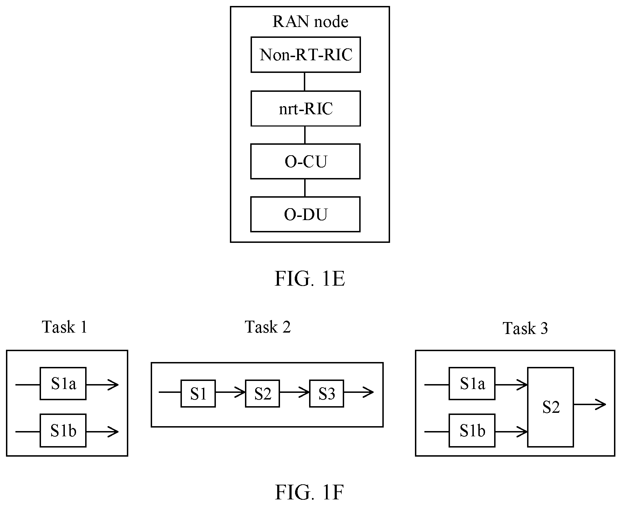

Optionally, the RIC may further include a non-real-time RIC (non-real-time RIC, Non-RT-RIC). For example, the RAN node may be shown in FIG. 1E.

In a possible design, in FIG. 1C, FIG. 1D, or FIG. 1E, the O-CU may include an RRC layer and a PDCP layer, the O-DU may include an RLC layer, a MAC layer, and a physical layer, and the nrt-RIC may implement a function of an application layer, and be configured to perform a delay-sensitive function such as load balancing, handover, and interference detection. Optionally, the nrt-RIC may further implement an AI-related function, and make full use of AI and machine learning based on an application program running on a network to control and optimize radio access network elements and resources. The non-RT-RIC may be used to perform one or more of the following non-real-time operations: service orchestration, policy management, analysis, and the like.

### 6. Extended reality (extended reality, XR)

The XR may be various environments that combine reality and virtuality and that are generated by using computing technologies and wearable devices, and human-computer interaction. The XR has advantages such as multiple views and strong interactivity, can provide brand-new experience for a user, and has great application value and commercial potential. The XR mainly includes virtual-reality interaction technologies such as VR, AR, and mixed reality (mixed reality, MR), and can be widely used in many fields such as entertainment, gaming, medical care, advertising, industry, online education, and engineering. The VR technology, the AR technology, and the MR technology are separately described below.

The VR technology integrates multiple technologies such as computer graphics and multimedia, to simulate functions of human sensory organs, for example, a visual sense, an auditory sense, and a tactile sense. In this way, people immerse in a virtual world generated by a computer, feeling as if they were there, and can perform real-time communication by using a language, a gesture, or the like, enhancing a sense of immersion. By using the VR technology, people feel reality of the real world, and can further break through restrictions of time, space, and the like, to have wonderful experience of entering the virtual world. In the VR technology, a user usually needs to wear an XR terminal (for example, a head-mounted device), so that a visual sense, an auditory sense, and/or a tactile sense is simulated for the user. The VR technology may be further used to perform motion tracking on the user, to update simulated visual content, auditory content, and/or tactile content in a timely manner. For example, in the VR technology, status information of the user (for example, position information and posture information of the user) may be processed, to display, on the XR terminal, scene content corresponding to the status information of the user.

In the AR technology, virtual information may be superposed on the real world by using a computer technology, and displayed through a device, for example, a mobile phone, a tablet computer, or glasses, to be perceived by people. In this way, reality and virtuality are merged, to enrich the real world. In short, more information is given to a real object, to enhance a stereoscopic sense, and enhance visual effect and interactive experience. For example, in the AR technology, perceived visual information (the visual information usually includes depth information) may be processed, to merge virtual information with the real world and enable the virtual information to be perceived by a user. In this way, the real world is "enhanced".

In the MR technology, the real world and a virtual world may be mixed to generate a new visual environment. The environment includes both a physical entity and virtual information, and content seen in the visual environment is "real-time" content.

### 7. Multi-node collaboration

In recent years, video rendering services represented by cloud gaming and VR, or computing services such as AI services represented by terminal visual cognition, AR, and MR, have increasingly higher requirements on a transmission bandwidth of a network and computational power of a terminal. However, a transmission bandwidth of a network and computational power of a terminal are limited, and cannot meet requirements of these computing services.

The video rendering service is used as an example. If video rendering is performed on a terminal, computational power of the terminal is insufficient to implement fully local high-quality rendering of the video. If video rendering is performed on a cloud, a low-latency requirement cannot be met, and a picture may be prone to black-border effect, distortion, or the like due to a limited transmission capability of a network.

The AI service is used as an example. If the AI service is performed on a terminal, computational power and battery power of the terminal are insufficient to support local AI inference. If the AI service is performed on a cloud, a high uplink bandwidth is needed for AI inference on the cloud when a low-latency requirement is met, resulting in limited uplink coverage and quantity of users.

Therefore, in order to balance the computational power of the terminal and the transmission capability of the network, a multi-node collaborative task processing scheme is proposed. The task may be referred to as work of processing data through multiple steps (step). The multiple steps may be parallel steps. For example, a task 1 shown in FIG. 1F includes two parallel steps, for example, S1a and S1b. Alternatively, the multiple steps may be serial steps. For example, a task 2 shown in FIG. 1F includes three serial steps, for example, S1 to S3. Alternatively, the multiple steps may be parallel and serial steps. For example, a task 3 shown in FIG. 1F includes two parallel steps, for example, S1a and S1b, and one step serial to the two steps, for example, S2.

For ease of describing multiple steps included in one task, one step or multiple associated steps in the multiple steps may be considered as one subtask, that is, one task may include multiple subtasks. For example, the task 1 shown in FIG. 1F includes two subtasks, where one subtask includes S1a, and the other subtask includes S1b. For another example, the task 2 shown in FIG. 1F includes two subtasks, where one subtask includes S1, and the other subtask includes S2 and S3; or one subtask includes S1 and S2, and the other subtask includes S3. Alternatively, the task 2 shown in FIG. 1F includes three subtasks, where a first subtask includes S1, a second subtask includes S2, and a third subtask includes S3. For another example, the task 3 shown in FIG. 1F includes two subtasks, where one subtask includes S1a and S1b, and the other subtask includes S2; or one subtask includes S1a, and the other subtask includes S1b and S2.

In this application, one computing service may include one or more tasks. If one computing service includes one task, the terminal and the cloud may separately perform a part of subtasks, to reduce a requirement of the task on the terminal and the computational power, and a requirement on the transmission bandwidth of the network. If one computing service includes multiple tasks, the terminal and the cloud may jointly process all or a part of tasks in the multiple tasks. For example, for each of the all or part of tasks, the terminal and the cloud may separately perform a part of subtasks, to reduce a requirement of the multiple tasks on the terminal and the computational power, and a requirement on the transmission bandwidth of the network. In addition, when one computing service includes multiple tasks, logic of performing each task by the terminal and the cloud is similar. Therefore, for ease of description, in this application, an example in which the terminal and the cloud perform one task (for example, a target task in the following embodiment) is used for description. These descriptions are applicable to any task performed by the terminal and the cloud. Unified descriptions are provided herein, and details are not described in the following.

It may be understood that the terminal or the cloud in this application may be collectively referred to as a compute node. The compute node may be any device having a computing capability and a communication capability. In addition to the terminal and the cloud, the compute node may be a RAN node, a functional module (such as a CU, a DU, or an RIC) of a RAN node, a core network element, a server, an application server, a cloud server, a cloud platform (cloud platform), a mobile edge computing (mobile edge computing, MEC) platform, a computing execution entity (computing execution entity, CEE), or the like. This is not limited. For descriptions of the terminal and the RAN node, refer to the foregoing descriptions of the technical terms in this application. The core network element is, for example, one or more of the following network elements: a user plane function (user plane function, UPF) network element, an access management function (access management function, AMF) network element, a session management function (session management function, SMF) network element, a policy control function (policy control function, PCF) network element, or an application function (application function, AF) network element. The cloud platform may be located in a data network behind the UPF network element, and may exchange user plane application layer data with a 5th generation system (5th generation system, 5GS) through an N6 interface, to provide a computing service.

In conclusion, one task may be split into multiple subtasks, and the multiple subtasks may be performed by multiple compute nodes. It should be understood that a quantity of compute nodes that perform one task is not limited in this application. The task 2 shown in FIG. 1F is used as an example. The task 2 may be split into three subtasks, and the three subtasks are respectively performed by three compute nodes, or the task 2 may be split into two subtasks, and the two subtasks are respectively performed by two compute nodes.

The following uses the terminal and the cloud as an example to describe a specific process in which multiple compute nodes perform a task.

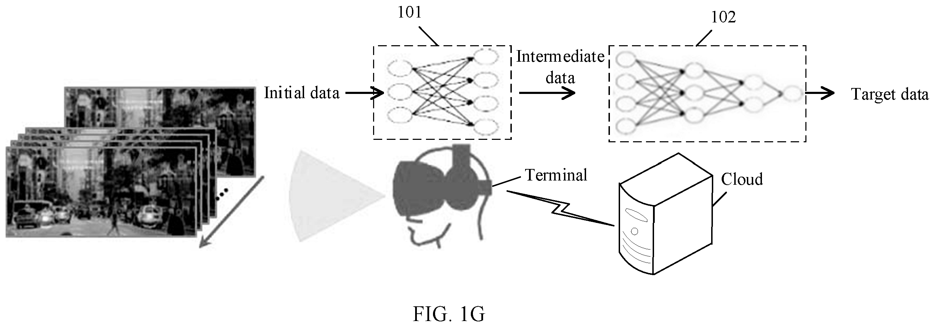

Refer to FIG. 1G. A VR task may be split into a subtask 101 and a subtask 102. The terminal may obtain initial data (for example, image information), input the initial data to the subtask 101 to obtain intermediate data, and send the intermediate data to the cloud. After receiving the intermediate data, the cloud may input the intermediate data to the subtask 102 to obtain target data.

It may be understood that the task may be split in multiple split manners, and different split manners may correspond to different communication requirements.

For example, the video rendering task is used as an example. The video rendering task may be split by separating a foreground from a background. For example, a foreground part of a picture is usually unpredictable with a small amount of rendering, and may be locally rendered by the terminal, and a background part of the picture is predictable with a large amount of rendering, and is rendered by the cloud. Alternatively, the video rendering task may be split based on a fixation point of a user. For example, a picture at a center of the fixation point may be locally rendered by the terminal, and a picture around the fixation point may be rendered by the cloud. Alternatively, the video rendering task may be split based on an object. For example, different nodes are selected, for rendering, based on rendering computing amounts and data volumes of different objects.

For the video rendering task, different split manners correspond to different volumes of video data to be transmitted. Therefore, different split manners correspond to different communication requirements. For example, in Table 1, an average bit rate of data transmission required by full cloud rendering is 4 Mbps, a peak value is 40 Mbps, and an allowed transmission delay is 25 ms. An average bit rate of data transmission required by device-cloud collaborative rendering is 0.49 Mbps to 1.8 Mbps, a peak value is 3.8 Mbps, and an allowed transmission delay is 50 ms. It can be seen that device-cloud collaborative processing of video rendering tasks can reduce a requirement on a downlink transmission rate. Therefore, selecting a proper split manner for a video rendering task can increase a quantity of users of downlink transmission that access a network.

**Table 1**

| | Bit rate of data transmission (Mbps) | | Transmission delay (ms) |
|---|---|---|---|
| | Average value | Peak value | |
| Full cloud rendering | 4 | 40 | 25 |
| Device-cloud collaborative rendering | 0.49 to 1.8 | 3.8 | 50 |

Then, an AI compute task is used as an example. A computing model of the AI compute task may be split into multiple submodels, and one or more submodels may be considered as one subtask. For example, the AI computing model is a neural network (neural network, NN) model or a DNN model. The NN model/the DNN model may include multiple layers, for example, an input (input) layer, a convolution (convolution) layer, a pooling (pooling) layer, and a fully connected (fully connected) layer. The layers may be split. For example, the input layer and the convolution layer are deployed on the terminal, and the pooling layer and the fully connected layer are deployed on the cloud. In this way, the terminal may sense behavior data of a user (for example, position information, posture information, or voice information of the user) or data of a surrounding environment (for example, a video or an image of the surrounding environment) through a sensing module, for example, a radar, a camera, a handle, or a microphone, sequentially input the data to the input layer and the convolution layer to obtain intermediate data, and send the intermediate data to the cloud. Subsequently, after receiving the intermediate data, the cloud sequentially inputs the intermediate data to the pooling layer and the fully connected layer to obtain target data. Optionally, the cloud may further send the target data to the terminal.

It is found through further research that, when a task is split, for different locations of task splitting (referred to as task split points below), a data volume of the intermediate data may vary, and a computation load of the terminal may also vary.

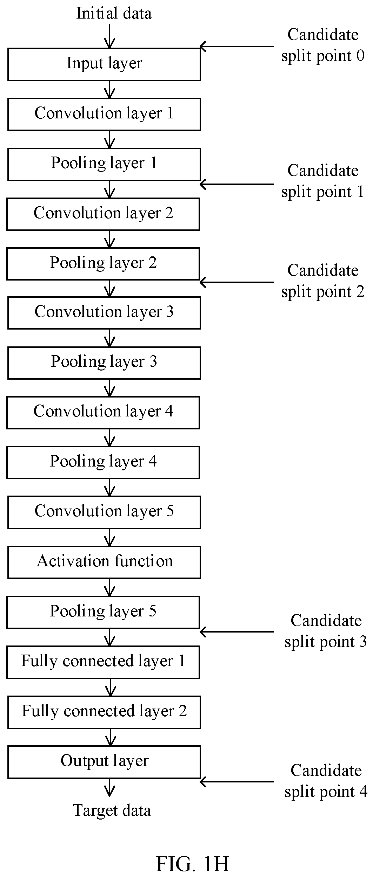

For example, a DNN model shown in FIG. 1H is used as an example. The DNN model includes an input layer, a convolution layer 1, a pooling layer 1, a convolution layer 2, a pooling layer 2, a convolution layer 3, a pooling layer 3, a convolution layer 4, a pooling layer 4, a convolution layer 5, an activation function (for example, a rectified linear unit (rectified linear unit, ReLU)), a pooling layer 5, a fully connected layer 1, a fully connected layer 2, and an output layer. Initial data may be sequentially input to the foregoing layers to obtain target data. FIG. 1H further shows five candidate split points (candidate split point), which are a candidate split point 0 to a candidate split point 4 respectively. The five candidate split points are at different positions in the DNN model. It can be understood that a layer preceding a candidate split point may be deployed on the terminal, and a layer following the candidate split point may be deployed on the cloud. The candidate split point 0 precedes the input layer. Therefore, the terminal sends the initial data to the cloud without performing a task, and the cloud performs all tasks. The candidate split point 1 follows the pooling layer 1. Therefore, the terminal performs a task preceding the pooling layer 1, and the cloud performs a task following the pooling layer 1. The candidate split point 2 follows the pooling layer 2. Therefore, the terminal performs a task preceding the pooling layer 2, and the cloud performs a task following the pooling layer 2. The candidate split point 3 follows the pooling layer 5. Therefore, the terminal performs a task preceding the pooling layer 5, and the cloud performs a task following the pooling layer 5. The candidate split point 4 follows the output layer. Therefore, the terminal performs all tasks, the cloud does not perform a task, and the terminal does not send the intermediate data to the cloud. An approximate output uplink data size (approximate output UL data size) (that is, the data volume of the intermediate data) and a computation load of the terminal (computation load in UE) (required UL data rate) that correspond to each candidate split point vary. The candidate split point 1 and the candidate split point 2 are used as an example. In Table 2, an approximate output uplink data size corresponding to the candidate split point 1 is 120 Mbit/s, and a computation load of the terminal corresponding to the candidate split point 1 is low (low); an approximate output uplink data size corresponding to the candidate split point 2 is 24 Mbit/s, and a computation load of the terminal corresponding to the candidate split point 2 is high (high). A larger approximate output uplink data size indicates more data to be transmitted by the terminal, that is, a larger data volume of the intermediate data. Therefore, the computing amount of the terminal is smaller, that is, the computation load of the terminal is lower. On the contrary, a smaller approximate output uplink data size indicates less data to be transmitted by the terminal, and a higher computation load of the terminal. Therefore, on the premise that a requirement on the computation load of the terminal is met, selecting a proper task split point can reduce a data rate to be transmitted, increasing a quantity of users that can access the network.

**Table 2**

| Split point (split point) | Approximate output uplink data size (Mbit/s) | Computation load of a terminal |
|---|---|---|
| Candidate split point 1 | 120 | Low |
| Candidate split point 2 | 24 | High |

In conclusion, a task scheduling result may affect a size of intermediate data, a communication requirement, a computation load of a terminal, and the like. Therefore, how to determine the task scheduling result is critical. The task scheduling result may indicate a manner according to which at least one compute node performs the task, in other words, indicate which subtasks in the task are to be performed by the compute node.

Currently, a RAN node may obtain a communication QoS profile (QoS profile), and indicate the communication QoS profile to a compute node, so that the compute node determines a task scheduling result corresponding to the communication QoS profile. Then, the compute node may perform the task based on the task scheduling result, to ensure data transmission quality. The foregoing method may be used in a scenario in which a task scheduling result has a requirement on communication QoS. However, with development of communication technologies, communication scenarios become increasingly complex. In these communication scenarios, if only cases in which a task scheduling result has a requirement on communication QoS are considered, the task scheduling result is not suitable for the compute node, affecting quality of service of the entire task.

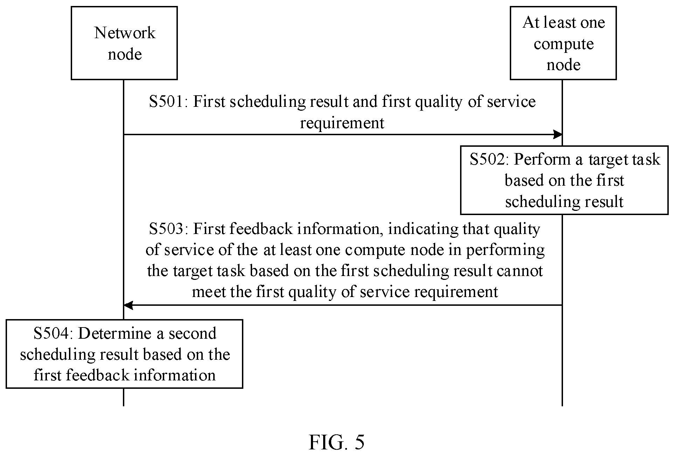

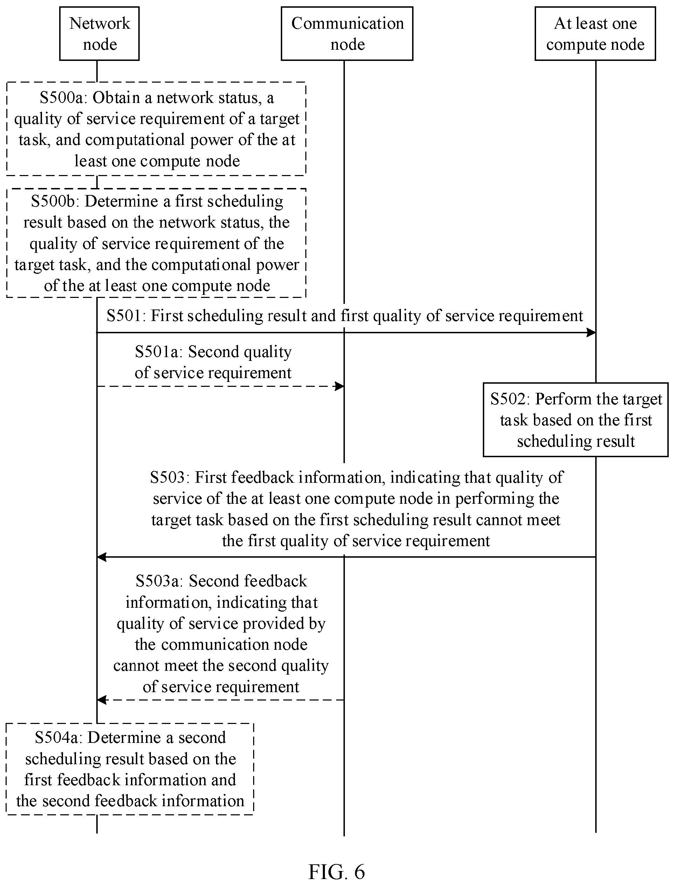

To resolve the foregoing problem, this application provides a communication method. In the method, a network node may send a first scheduling result and a first quality of service requirement to at least one compute node. The first scheduling result may indicate a first manner according to which the at least one compute node performs a target task. After receiving the foregoing information, the at least one compute node may perform the target task according to the first manner, and send first feedback information to the network node. The first feedback information may indicate that quality of service in performing the target task according to the first manner cannot meet the first quality of service requirement. After receiving the first feedback information, the network node may determine a second scheduling result based on the first feedback information. The second scheduling result indicates a second manner according to which the at least one compute node performs the target task, and the second manner is different from the first manner. In the foregoing process, the network node may update the scheduling result of the target task in time based on the feedback of the at least one compute node, so that an updated scheduling result is more suitable for the compute node, to ensure quality of service of the target task and improve user experience. A specific process of the method is specifically described in the following method shown in FIG. 5 or FIG. 6, and details are not described herein again.

The following describes implementations of this application in detail with reference to accompanying drawings.

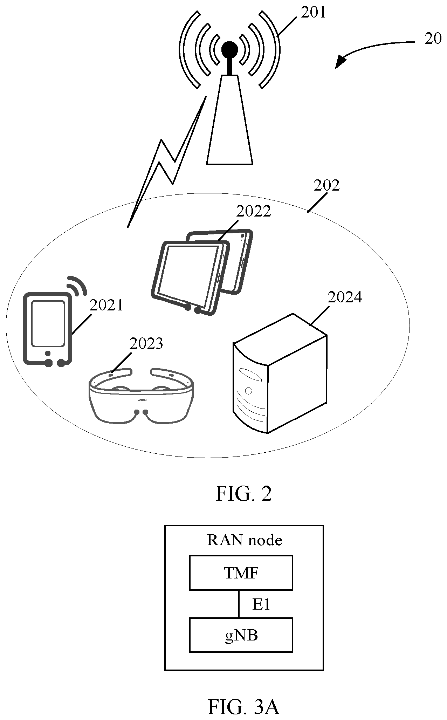

The communication method provided in this application may be applied to various communication systems. For example, the communication system may be a universal mobile telecommunications system (universal mobile telecommunications system, UMTS) system, a long term evolution (long term evolution, LTE) system, a 5th generation (5th generation, 5G) communication system, a wireless fidelity (wireless fidelity, Wi-Fi) system, a 3rd generation partnership project (3rd generation partnership project, 3GPP)-related communication system, a future evolved communication system (for example, a 6th generation (6th generation, 6G) communication system), or a system integrating multiple systems. This is not limited. 5G may also be referred to as new radio (new radio, NR). The method provided in this application is described below by using a communication system 20 shown in FIG. 2 as an example. FIG. 2 is merely a diagram, and does not constitute a limitation on an application scenario of the technical solutions provided in this application.

FIG. 2 is a diagram of an architecture of the communication system 20 according to this application. In FIG. 2, the communication system 20 may include a network node 201 and at least one compute node 202 that can communicate with the network node 201. For example, the at least one compute node includes one or more of a mobile phone 2021, a tablet computer 2022, AR glasses 2023, or an application server 2024. For other descriptions of the compute node, refer to the foregoing corresponding descriptions. Details are not described again.

In this application, the network node 201 may have a task management function (task management function, TMF) or a computing management function (computing management function, CMF). For example, the network node 201 may adjust a scheduling result of a target task based on feedback of the compute node, to ensure quality of service of the target task. Optionally, the network node 201 may further sense a network status, and/or sense a computational power status of the compute node, and/or a task topology of the target task (for example, which subtasks are included in the target task). Optionally, the network node 201 may further determine a first scheduling result, so that the compute node performs the target task based on the first scheduling result. Optionally, the network node 201 may further determine a first quality of service requirement, so that the compute node sends feedback information to the network node 201 when provided quality of service in performing the target task based on the first scheduling result does not meet the first quality of service requirement.

It may be understood that the network node 201 may be deployed on a RAN side or a core network side. This is not limited. For example, a function of the network node 201, for example, the TMF or the CMF, may be deployed on a RAN node. For another example, a function of the network node 201 may be deployed on one or more network elements in a core network, for example, deployed on an AMF network element, an SMF network element, or a newly added network element in the core network. The following describes a deployment manner of the network node 201 by using an example in which the TMF is deployed on the RAN node.

Refer to FIG. 3A. A TMF may be independently deployed on a RAN node. For example, the RAN node may have the TMF and a gNB function, and the TMF may communicate with the gNB through an E1 interface. Optionally, the E1 interface may be an interface between the TMF and a CU in the gNB.

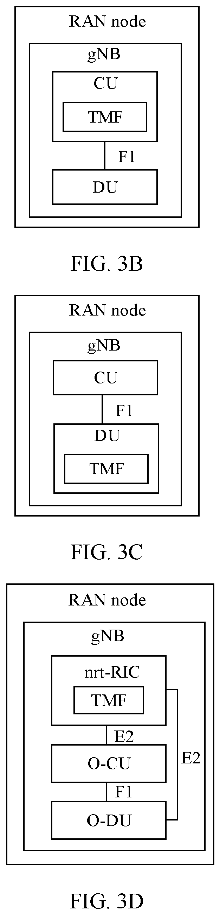

Refer to FIG. 3B. A TMF may be deployed on a CU in a RAN node. For example, the RAN node has a gNB function, the gNB includes the CU and a DU, and the CU has the TMF.

Refer to FIG. 3C. A TMF may be deployed on a DU in a RAN node. For example, the RAN node has a gNB function, the gNB includes a CU and the DU, and the DU has the TMF.

Refer to FIG. 3D. A TMF may be deployed on an RIC, for example, deployed on an nrt-RIC. For example, a RAN node has a gNB function, the gNB includes the nrt-RIC, an O-CU, and an O-DU, and the nrt-RIC has the TMF. The TMF may communicate with the O-CU or the O-DU through an E2 interface. A third-party application can also be deployed on the nrt-RIC.

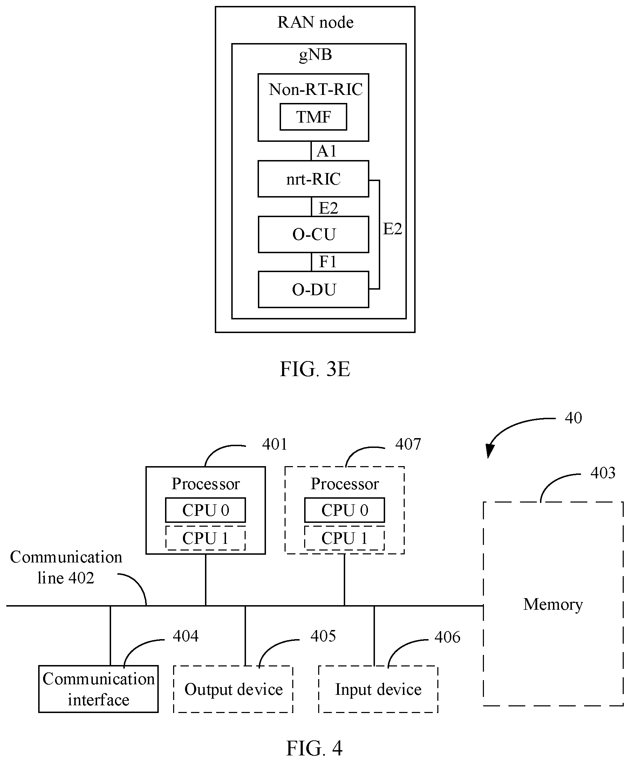

Refer to FIG. 3E. A TMF may be deployed on an RIC, for example, deployed on a non-RT-RIC. For example, a RAN node has a gNB function, the gNB includes the non-RT-RIC, an nrt-RIC, an O-CU, and an O-DU, and the non-RT-RIC has the TMF. The TMF can communicate with the nrt-RIC through an A1 interface.

It should be understood that the foregoing examples are merely examples of deployment manners of the network node 201. In specific application, the network node 201 may be further deployed in another manner. For example, a function of the network node 201 may be further deployed on an O-CU or an O-DU. This is not limited.

It may be understood that the communication system 20 shown in FIG. 2 is merely used as an example, and is not intended to limit the technical solutions of this application. A person skilled in the art should understand that, in a specific implementation process, the communication system 20 may further include another device, and a quantity of network nodes and a quantity of compute nodes may also be determined based on a specific requirement. This is not limited.

Optionally, each node in FIG. 2 (for example, the network node 201 or any compute node) of this application may alternatively be referred to as a communication apparatus, which may be a general-purpose device or a dedicated device. This is not specifically limited in this application.

Optionally, a related function of each node in FIG. 2 (for example, the network node 201 or any compute node) of this application may be implemented by one device, or may be implemented by multiple devices together, or may be implemented by one or more functional modules in one device. This is not specifically limited in this application. It may be understood that the foregoing function may be a network element in a hardware device, or may be a software function running on dedicated hardware, or a combination of hardware and software, or an instantiated virtualized function on a platform (for example, a cloud platform).

During specific implementation, each node in FIG. 2 (for example, the network node 201 or any compute node) of this application may use a composition structure shown in FIG. 4, or include components shown in FIG. 4. FIG. 4 is a diagram of a hardware structure of a communication apparatus to which this application is applicable. The communication apparatus 40 includes at least one processor 401 and at least one communication interface 404, to implement the method provided in this application. The communication apparatus 40 may further include a communication line 402 and a memory 403.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path, such as a bus, for transferring information between the components described above.

The communication interface 404 is configured to communicate with another device or a communication network. The communication interface 404 may be any apparatus like a transceiver, for example, may be an Ethernet interface, a radio access network (radio access network, RAN) interface, a wireless local area network (wireless local area network, WLAN) interface, a transceiver, a pin, a bus, an interface circuit, or a transceiver circuit.

The memory 403 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer, but is not limited thereto. The memory may exist independently, and is coupled to the processor 401 through the communication line 402. Alternatively, the memory 403 may be integrated with the processor 401. Usually, the memory provided in this application may be non-volatile.

The memory 403 is configured to store computer-executable instructions for performing the solutions provided in this application, and the processor 401 controls execution of the computer-executable instructions. The processor 401 is configured to execute the computer-executable instructions stored in the memory 403, to implement the method provided in this application. Alternatively, optionally, in this application, the processor 401 may perform a processing-related function in the following method in this application, and the communication interface 404 is responsible for communicating with another device or a communication network. This is not specifically limited in this application.

Optionally, the computer-executable instructions in this application may also be referred to as application program code. This is not specifically limited in this application.

The coupling in this application is indirect coupling or a communication connection between apparatuses, units, or modules for information exchange between the apparatuses, the units, or the modules, and may be in electrical, mechanical, or other forms.

In an embodiment, the processor 401 may include one or more CPUs, for example, a CPU 0 and a CPU 1 in FIG. 4.

In an embodiment, the communication apparatus 40 may include multiple processors, for example, the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 40 may further include an output device 405 and/or an input device 406. The output device 405 is coupled to the processor 401, and may display information in multiple manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 is coupled to the processor 401, and may receive a user input in multiple manners. For example, the input device 406 may be a mouse, a keyboard, a touchscreen device, or a sensor device.

It may be understood that the composition structure shown in FIG. 4 constitutes no limitation on the communication apparatus. In addition to the components shown in FIG. 4, the communication apparatus may include more or fewer components than those shown in the figure, combine some components, or have different component arrangements.

The following describes the method provided in this application with reference to the accompanying drawings. Network elements in the following embodiments may have components shown in FIG. 4. Details are not described again.

It may be understood that names of messages between nodes, names of parameters in messages, or the like in the following embodiments of this application are merely examples, and there may alternatively be other names during specific implementation. This is not specifically limited in this application.

It may be understood that "sending information to ... (for example, a compute node)" in this application may be understood as that a destination end of the information is the compute node, and may include directly or indirectly sending information to the compute node. "Receiving information from ... (for example, a compute node)" may be understood as that a source end of the information is the compute node, and may include directly or indirectly receiving information from the compute node. Information may undergo necessary processing, for example, a format change, between the source end for sending the information and the destination end. However, the destination end may understand valid information from the source end. Similar descriptions in this application may be construed in a similar manner, and details are not described herein again.

It may be understood that, in this application, "/" may represent an "or" relationship between associated objects. For example, A/B may represent A or B. The term "and/or" may be used to describe three relationships that exist between associated objects. For example, A and/or B may represent the following three cases: Only A exists, both A and B exist, and only B exists, where A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe optional entries of the project. When there are more elements in the representation, a meaning of the representation may be obtained according to the foregoing rules.

For ease of description of technical solutions of this application, in this application, terms such as "first" and "second" may be used to distinguish between technical features with same or similar functions. Terms such as "first" and "second" do not limit a quantity and an execution order, and the terms such as "first" and "second" do not indicate a definite difference. In this application, a term such as "example" or "for example" indicates an example, an illustration, or a description. Any embodiment or design scheme described as an "example" or "for example" should not be explained as being more preferred or having more advantages than another embodiment or design scheme. Use of the terms such as "example" or "for example" is intended to present a related concept in a specific manner for ease of understanding.

It can be understood that an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of processes do not mean an execution order in various embodiments of this application. The execution order of the processes should be determined based on functions and internal logic of the processes, and should not be construed as any limitation on implementation processes of this application.

It may be understood that, in this application, "indicate" may include a direct indication and an indirect indication, or may include an explicit indication and an implicit indication. When a piece of information is described to indicate A, the information may directly indicate A or indirectly indicate A, but it does not indicate that the information definitely carries A. Information indicated by information is referred to as to-be-indicated information. In a specific implementation process, the to-be-indicated information may be indicated in multiple manners. By way of example rather than limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement order of multiple pieces of information that is pre-agreed on (for example, stipulated in a protocol), to reduce indication overheads to some extent.

It may be understood that in this application, "when ...", "in a case of ...", "provided that", and "if" all mean that corresponding processing is performed in an objective case, and are not intended to limit a time, do not require a determining action during implementation, and do not mean that there is another limitation.

"Simultaneously" in this application may be understood as being at a same time point, may be understood as being in a period of time, or may be understood as being in a same periodicity.

In this application, "greater than or equal to" may be replaced with "greater than" or "equal to"; and "less than or equal to" may be replaced with "less than" or "equal to". For example, "A is greater than or equal to B" may be replaced with "A is greater than B", or replaced with "A is equal to B"; and "A is less than or equal to B" may be replaced with "A is less than B", or replaced with "A is equal to B".

It may be understood that in some scenarios, some optional features in this application may be independently implemented without depending on other features, for example, a solution on which the optional features are currently based, to resolve a corresponding technical problem and achieve corresponding effects. Alternatively, in some scenarios, the optional features may be combined with other features based on a requirement. For example, S500a and S500b in the following embodiment of this application may be independently implemented without depending on the method shown in FIG. 5. For another example, S501a and S503a in the following embodiment of this application may be independently implemented without depending on the method shown in FIG. 5, so that a network node determines a second scheduling result based on second feedback information. Correspondingly, an apparatus provided in this application may also correspondingly implement these features or functions. Details are not described herein.

It may be understood that, in this application, a same step, or steps or technical features that have a same function may be mutually referenced between different embodiments.

It may be understood that, in this application, a network node and/or a compute node may perform some or all steps in this application. These steps are merely examples. In this application, other steps or variations of various steps may alternatively be performed. In addition, the steps may be performed in an order different from an order shown in this application, and not all steps in this application are necessarily performed.

It may be understood that, in the method provided below in this application, the method is illustrated by using an example in which the network node and the compute node serve as execution bodies of interaction illustration. However, the execution bodies of the interaction illustration are not limited in this application. For example, the network node in the method provided in the following embodiments of this application may alternatively be a chip, a chip system, or a processor that supports the network node in implementing the method, or may be a logical node, a logical module, or software that can implement all or some functions of the network node. The compute node in the method provided in the following embodiments of this application may alternatively be a chip, a chip system, or a processor that supports the compute node in implementing the method, or may be a logical node, a logical module, or software that can implement all or some functions of the compute node.

FIG. 5 shows a communication method according to this application. The communication method may include the following steps.

S501: A network node sends a first scheduling result and a first quality of service requirement to at least one compute node. Correspondingly, the at least one compute node receives the first scheduling result and the first quality of service requirement from the network node.

In this application, the network node may be the network node 201 in the communication system 20 shown in FIG. 2, and the at least one compute node may be the at least one compute node 202 in the communication system 20.

In this application, the first scheduling result may indicate a first manner according to which the at least one compute node performs a target task. The first manner may indicate the at least one compute node to perform a first subtask in the target task. For example, the first scheduling result includes an identifier of the first subtask. It should be understood that the first scheduling result may alternatively indicate the at least one compute node to perform the entire target task. This is not limited. For descriptions of the target task and the first subtask, refer to the foregoing descriptions of the task and the subtask. Details are not described herein again.

In this application, the first quality of service requirement may indicate quality of service that needs to be met when the at least one compute node performs the target task according to the first manner. Optionally, the first quality of service requirement may indicate a quality of service requirement related to computing. For example, the first quality of service requirement may indicate at least one of the following: a computing type requirement, a computing amount requirement, a computing delay requirement, a computing energy consumption requirement, or a computing accuracy requirement. The following describes the foregoing requirements in detail.

### (1) Computing type requirement

The computing type requirement indicated by the first quality of service requirement may cause the at least one compute node to determine a computing type required for performing the target task according to the first manner. The computing type may alternatively be replaced with a computational power type.

In a possible design, based on computational power of physical hardware, the computing type includes a CPU, a graphics processing unit (graphics processing unit, GPU), a neural network processing unit (neural network processing unit, NPU), a tensor processing unit (tensor processing unit, TPU), or the like.

In another possible design, based on a service type, the computing type includes image recognition, video recognition, compression, graphics rendering, AI training, AI inference, perception processing, high-performance computing, big data offline analysis, or the like.

Optionally, the first quality of service requirement may further indicate a parameter corresponding to the computing type. For example, the first quality of service requirement further indicates a parameter such as a model of physical hardware, a memory, or a clock speed, or the first quality of service requirement further indicates an algorithm used for a service type, for example, a recognition algorithm used for image recognition.

### (2) Computing amount requirement

The computing amount requirement indicated by the first quality of service requirement may cause the at least one compute node to determine a computing amount required for performing the target task according to the first manner. The computing amount herein may alternatively be replaced with an input/output data throughput, a computing capability, an operational capability, or the like.

For example, the computing amount requirement may indicate a quantity of operations per second or a quantity of floating-point operations per second that need to be performed by a processor of at least one compute node.

Optionally, the first quality of service requirement may further indicate a parameter corresponding to the computing amount. For example, the first quality of service requirement further indicates a model of hardware, a memory (for example, a required content capacity in bytes), an input (input)/output (input/output, I/O) speed (for example, a bandwidth required for a specific quantity of read/write operations per second (I/O operations per second, IOPS)), or a clock speed (for example, a required clock speed in Hz) required for performing the target task.

### (3) Computing delay requirement

The computing delay requirement indicated by the first quality of service requirement may cause the at least one compute node to determine a delay requirement that needs to be met for performing the target task according to the first manner. For example, the computing delay requirement may indicate a time length in which the at least one compute node needs to complete the first subtask.

### (4) Computing energy consumption requirement

The computing energy consumption requirement indicated by the first quality of service requirement may cause the at least one compute node to determine computing energy consumption required for performing the target task according to the first manner. The computing energy consumption may alternatively be replaced with metrics to and from which the computing energy consumption can be converted, such as computation power consumption or computation power. The computing energy consumption may be in watts (W), joules (W), or the like.

For example, the computing energy consumption requirement indicates how much energy or power the at least one compute node needs to consume to perform the target task according to the first manner.

It can be understood that the computing energy consumption may be total energy consumption including emission energy consumption and computing energy consumption, or average computing energy consumption within a period of time, or computing energy consumption per processing or in a short period of time. For example, the computing energy consumption is computing energy consumption for processing each video frame, computing energy consumption for performing the first subtask, average computing energy consumption within a predefined period of time, or the like.

Optionally, the computing energy consumption may further include thermal design power consumption. The thermal design power consumption is a metric reflecting heat release of a processor (such as a CPU or a GPU), and may refer to heat released when the processor reaches a maximum load, and may be in watts.

### (5) Computing accuracy requirement

The computing accuracy requirement indicated by the first quality of service requirement may indicate an error requirement between a computation result of the target task (for example, an inference result of an AI model, a computation result of an algorithm, or a training result of an AI model) and a true value. For example, an error between the two is required to be less than or equal to 5%. Therefore, the computing accuracy requirement may cause the at least one compute node to determine an error allowed for performing the target task according to the first manner.

Optionally, the computing accuracy requirement may further indicate a probability of computation success, a probability of computation error, or the like.

It should be understood that the foregoing requirements are merely examples of computing-related quality of service requirements that may be indicated by the first quality of service requirement. In specific application, the first quality of service requirement may indicate more or fewer quality of service requirements than those described above. This is not limited.

To better understand the method provided in this application, the following describes S501 by using an example in which a quantity of the at least one compute node is 1 and an example in which a quantity of the at least one compute node is greater than 1.

**Scenario 1:** The quantity of the at least one compute node is 1. The following uses an example in which the compute node is a first compute node for description. The first compute node is, for example, the mobile phone 2021, the tablet computer 2022, the AR glasses 2023, or the application server 2024 in FIG. 2.

In a possible implementation, the network node sends the first scheduling result and the first quality of service requirement to the first compute node, so that the first compute node performs the target task based on the first scheduling result, and determines the quality of service that needs to be met when the first compute node performs the target task based on the first scheduling result.

For example, the target task is the task 2 shown in FIG. 1F. The first scheduling result may indicate the first compute node to perform S1 and S2 (that is, the first subtask includes S1 and S2). Content indicated by the first quality of service requirement may be shown in Table 3. After receiving the first scheduling result, the first compute node may determine that the first compute node is to perform S1 and S2 of the task 2. After receiving the first quality of service requirement, the first compute node may determine the following information: (1) A computing type corresponding to S1 to S2 is a CPU, a model of the CPU is XX, and a clock speed is 3.2 GHz. (2) Performing S1 and S2 requires the CPU to perform 100 million floating-point operations per second and a required I/O bandwidth is 5 Gbit/s. (3) Performing S1 and S2 cannot take more than 20 ms. (4) Energy consumption required for performing S1 and S2 is 2 watts. (5) An error between a result of performing S1 and S2 and a true value is less than or equal to 3%.

**Table 3**

| First quality of service requirement | Specific Requirement |
|---|---|
| Computing type requirement | CPU (model: XX; clock speed: 3.2 GHz) |
| Computing amount requirement | Quantity of floating-point operations performed by the CPU per second: 100 million; and I/O bandwidth: 5 Gbits/s |
| Computing delay requirement | 20 ms |
| Computing energy consumption requirement | 2 watts |
| Computing accuracy requirement | Error rate ≤ 3% |

It should be understood that Table 3 is merely an example of information indicated by the first quality of service requirement. In specific application, the first quality of service requirement may indicate more or less information than those shown in Table 3. This is not limited.

Optionally, in Scenario 1, the first scheduling result may indicate the first compute node to perform the entire target task.

**Scenario 2:** The quantity of the at least one compute node is greater than 1. The following uses two compute nodes (for example, a second compute node and a third compute node) as an example for description. For example, the second compute node is the mobile phone 2021 in FIG. 2, and the third compute node is the tablet computer 2022 in FIG. 2; or the second compute node is the AR glasses 2023 in FIG. 2, and the third compute node is the application server 2024 in FIG. 2. It may be understood that, when the quantity of the at least one compute node is greater than 2, an operation of each compute node is similar to an operation of the second compute node or an operation of the third node. For details, refer to the following corresponding descriptions. Details are not described again.

In a possible implementation, the network node sends the first scheduling result and the first quality of service requirement to the second compute node, and sends the first scheduling result and the first quality of service requirement to the third compute node. In this way, the second compute node is caused to perform the target task based on the first scheduling result, and determine the quality of service that needs to be met when the second compute node performs the target task based on the first scheduling result, and the third compute node is caused to perform the target task based on the first scheduling result, and determine the quality of service that needs to be met when the third compute node performs the target task based on the first scheduling result.

It may be understood that the first scheduling result sent by the network node to the second compute node (for ease of description, referred to as a scheduling result of the second compute node below) and the first scheduling result sent by the network node to the third compute node (for ease of description, referred to as a scheduling result of the third compute node below) may be the same or different.

In one case, the first scheduling result may indicate a subtask that needs to be performed by a compute node corresponding to the first scheduling result. For example, the target task is the task 2 shown in FIG. 1F. The scheduling result of the second compute node may indicate the second compute node to perform S1 and S2, and the scheduling result of the third compute node may indicate the third compute node to perform S3.

In another case, the first scheduling result indicates a subtask that needs to be performed by each compute node. The target task being the task 2 shown in FIG. 1F is still used as an example. Both the scheduling result of the second compute node and the scheduling result of the third compute node indicate the second compute node to perform S1 and S2, and the third compute node to perform S3.

It may be understood that the first quality of service requirement sent by the network node to the second compute node (for ease of description, referred to as a quality of service requirement of the second compute node below) and the first quality of service requirement sent by the network node to the third compute node (for ease of description, referred to as a quality of service requirement of the third compute node below) may be the same or different. For example, if the quality of service that needs to be met when the second compute node performs the target task is the same as the quality of service that needs to be met when the third compute node performs the target task, the quality of service requirement of the second compute node is the same as the quality of service requirement of the third compute node. If the quality of service that needs to be met when the second compute node performs the target task is different from the quality of service that needs to be met when the third compute node performs the target task, the quality of service requirement of the second compute node is different from the quality of service requirement of the third compute node.

It may be understood that "the quality of service requirement of the second compute node being different from the quality of service requirement of the third compute node" herein may mean that a computing quality of service requirement indicated by the quality of service requirement of the second compute node is different from that indicated by the quality of service requirement of the third compute node. For example, the quality of service requirement of the second compute node indicates a computing type requirement and a computing delay requirement, and the quality of service requirement of the third compute node indicates a computing type requirement, a computing amount requirement, and a computing delay requirement. Alternatively, "the quality of service requirement of the second compute node being different from the quality of service requirement of the third compute node" herein may mean that a computing quality of service requirement indicated by the quality of service requirement of the second compute node is the same as that indicated by the quality of service requirement of the third compute node, but a specific requirement indicated by any computing quality of service requirement varies. For example, the quality of service requirement of the second compute node and the quality of service requirement of the third compute node each indicate a computing amount requirement, but the computing amount requirement indicated by the former indicates that an I/O bandwidth is 5 Gbits/S, and the computing amount requirement indicated by the latter indicates that an I/O bandwidth is 7 Gbits/S.

It may be understood that content indicated by the quality of service requirement of the second compute node or the quality of service requirement of the third compute node is similar to that in Table 3. For details, refer to corresponding descriptions in Scenario 1. Details are not described again.

It may be understood that a manner in which the network node sends the first scheduling result and the first quality of service requirement to the at least one compute node is related to a location of the network node in the network and a location of the compute node in the network. With reference to FIG. 2 and FIG. 3A to FIG. 3E, the following describes a manner in which the network node 201 sends the first scheduling result to the mobile phone 2021, the tablet computer 2022, the AR glasses 2023, and the application server 2024. A manner of sending the first quality of service requirement is similar to that of sending the first scheduling result, and details are not described again.

For example, if the network node 201 is independently deployed on the RAN node (as shown in FIG. 3A), the RAN node may send the first scheduling result to the mobile phone 2021, the tablet computer 2022, or the AR glasses 2023 through an air interface. For example, the first scheduling result is carried in downlink control information (downlink control information, DCI), a medium access control control element (medium access control control element, MAC CE), a PDCP control PDU (PDCP Control PDU) message, or an RRC message. The RAN node may send the first scheduling result to the application server 2024 via a core network. For example, the RAN node may include the first scheduling result in a user plane part of a general packet radio service (general packet radio service, GPRS) tunneling protocol (user plane part of GPRS tunneling protocol, GTP-U) header of at least one piece of uplink data transmitted through an NG3 interface. After the RAN node sends the GTP-U header to a UPF network element, the UPF network element detects GTP-U header information of uplink data, and notifies the application server 2024 of the first scheduling result in an application programming interface (application programming interface, API) manner via an NEF network element or a local NEF (local-NEF) network element.

For example, if the network node 201 is deployed on the CU in the RAN node (as shown in FIG. 3B), the CU may send the first scheduling result to the DU through an F1 interface, and the DU sends the first scheduling result to the mobile phone 2021, the tablet computer 2022, or the AR glasses 2023 by using DCI or a MAC CE. Alternatively, the CU may send the first scheduling result to the mobile phone 2021, the tablet computer 2022, or the AR glasses 2023 by using a PDCP control PDU message or an RRC message. The CU may send the first scheduling result to the application server 2024 via a core network (for example, a UPF network element or an NEF network element in the core network).

For example, if the network node 201 is deployed on the DU in the RAN node (as shown in FIG. 3C), the DU may send the first scheduling result to the mobile phone 2021, the tablet computer 2022, or the AR glasses 2023 by using DCI or a MAC CE. Alternatively, the DU may send the first scheduling result to the CU through an F1 interface, and the CU sends the first scheduling result to the mobile phone 2021, the tablet computer 2022, or the AR glasses 2023 by using a PDCP control PDU message or an RRC message. Further, if the CU is split into a CU-CP and a CU-UP, the DU may send the first scheduling result to the CU-UP via the CU-CP, or the DU may send the first scheduling result to the CU-UP through an F1-u interface (for example, the first scheduling result is carried in a GTP-U header of uplink data transmitted through the F1-u interface), so that the CU-UP sends the first scheduling result to the mobile phone 2021, the tablet computer 2022, or the AR glasses 2023. It may be understood that after receiving the first scheduling result, the CU or the CU-UP may further send the first scheduling result to the application server 2024 via a core network (for example, a UPF network element or an NEF network element in the core network).

For example, if the network node 201 is deployed on the nrt-RIC in the RAN node (as shown in FIG. 3D), the nrt-RIC may send the first scheduling result to the O-CU through an E2 interface. After receiving the first scheduling result, the O-CU may send the first scheduling result to the mobile phone 2021, the tablet computer 2022, or the AR glasses 2023 by using a PDCP control PDU message or an RRC message. Alternatively, the nrt-RIC may send the first scheduling result to the O-DU through an E2 interface. After receiving the first scheduling result, the O-DU may send the first scheduling result to the mobile phone 2021, the tablet computer 2022, or the AR glasses 2023 by using DCI or a MAC CE. Further, if the O-CU is split into an O-CU-CP and an O-CU-UP, the nrt-RIC may send the first scheduling result to the O-CU-UP via the O-CU-CP, or the nrt-RIC may send the first scheduling result to the O-CU-UP, so that the O-CU-UP sends the first scheduling result to the mobile phone 2021, the tablet computer 2022, or the AR glasses 2023. It may be understood that after receiving the first scheduling result, the O-CU or the O-CU-UP may further send the first scheduling result to the application server 2024 via a core network (for example, a UPF network element or an NEF network element in the core network).

For example, if the network node 201 is deployed on the non-RT-RIC in the RAN node (as shown in FIG. 3E), the non-RT-RIC may send the first scheduling result to the nrt-RIC through an A1 interface, so that the nrt-RIC may send the first scheduling result to the mobile phone 2021, the tablet computer 2022, the AR glasses 2023, and the application server 2024 in the foregoing manner.

Optionally, the network node may further send, to the at least one compute node, parameter information required for performing the target task based on the first scheduling result, for example, one or more of information about an AI model, information about an algorithm, or information about a program used for performing the target task.

S502: The at least one compute node performs the target task based on the first scheduling result.

It may be understood that the at least one compute node may perform the target task according to the first manner. For example, in the foregoing Scenario 1, the first compute node performs the target task according to the first manner indicated by the first scheduling result. In the foregoing Scenario 2, the second compute node performs the target task according to the first manner corresponding to the second compute node, and the third compute node performs the target task according to the first manner corresponding to the third compute node.

Optionally, if the compute nodes that perform the target task include the application server, the application server may further send, to a terminal, a computation result obtained by performing the target task.

Optionally, if the at least one compute node cannot meet the first quality of service requirement, the at least one compute node may not perform S502, but directly perform S503, to indicate to the network node that the first quality of service requirement cannot be met.

S503: The at least one compute node sends first feedback information to the network node. Correspondingly, the network node receives the first feedback information from the at least one compute node.

In a possible implementation, if the quality of service of the at least one compute node in performing the target task according to the first manner cannot meet the first quality of service requirement, the at least one compute node sends the first feedback information to the network node. The first feedback information may indicate that the quality of service of the at least one compute node in performing the target task according to the first manner cannot meet the first quality of service requirement. For example, the first feedback information includes 1 bit, and a value of the bit being "0" or "1" indicates that the quality of service of the at least one compute node in performing the target task according to the first manner cannot meet the first quality of service requirement. The "quality of service of the at least one compute node in performing the target task according to the first manner" herein may be quality of service detected by the compute node at a time, or quality of service collected in a time period or a periodicity, for example, an average value, a maximum value, or a minimum value of the quality of service collected in the time period or the periodicity.

Optionally, the first feedback information may further indicate the quality of service of the at least one compute node in performing the target task according to the first manner, so that the network node adjusts a scheduling policy of the target task based on the quality of service and the first quality of service requirement. For example, the first feedback information indicates that when the at least one compute node performs the target task according to the first manner, a quantity of floating-point operations performed by the CPU per second is 100 million; and/or indicates that a delay of the at least one compute node in performing the target task according to the first manner is 25 ms, and/or indicates that computing energy consumption of the at least one compute node in performing the target task according to the first manner is 10 watts, and/or indicates that accuracy of the at least one compute node in performing the target task according to the first manner is 5%. Alternatively, the first feedback information further indicates a deviation between the quality of service of the at least one compute node in performing the target task according to the first manner and the first quality of service requirement, so that the network node adjusts the scheduling policy of the target task based on the deviation.

For example, in Scenario 1, if the computing type of the first compute node does not meet the computing type indicated by the first quality of service requirement, the first feedback information indicates that the computing type of the first compute node does not meet the computing type indicated by the first quality of service requirement. Optionally, the first feedback information further indicates a computing type supported by the first compute node. In addition/Alternatively, if the I/O bandwidth of the first compute node in performing the target task according to the first manner is less than the I/O bandwidth indicated by the first quality of service requirement, the first feedback information indicates that the computing amount of the first compute node in performing the target task according to the first manner does not meet the computing amount requirement indicated by the first quality of service requirement. Optionally, the first feedback information further indicates the I/O bandwidth of the first compute node in performing the target task according to the first manner, or indicates a deviation between the I/O bandwidth of the first compute node in performing the target task according to the first manner and the I/O bandwidth indicated by the first quality of service requirement. In addition/Alternatively, if the computing delay of the first compute node in performing the target task according to the first manner is greater than the delay indicated by the first quality of service requirement, the first feedback information indicates that the computing delay of the first compute node in performing the target task according to the first manner does not meet the computing delay requirement indicated by the first quality of service requirement. Optionally, the first feedback information further indicates the computing delay of the first compute node in performing the target task according to the first manner, or indicates a deviation between the computing delay of the first compute node in performing the target task according to the first manner and the computing delay indicated by the first quality of service requirement. In addition/Alternatively, if the computing energy consumption of the first compute node in performing the target task according to the first manner is greater than the computing energy consumption indicated by the first quality of service requirement, the first feedback information indicates that the computing energy consumption of the first compute node in performing the target task according to the first manner does not meet the computing energy consumption requirement indicated by the first quality of service requirement. Optionally, the first feedback information further indicates the computing energy consumption of the first compute node in performing the target task according to the first manner, or indicates a deviation between the computing energy consumption of the first compute node in performing the target task according to the first manner and the computing energy consumption indicated by the first quality of service requirement. In addition/Alternatively, if the computing accuracy of the first compute node in performing the target task according to the first manner is lower than the computing accuracy indicated by the first quality of service requirement, the first feedback information indicates that the computing accuracy of the first compute node in performing the target task according to the first manner does not meet the computing accuracy requirement indicated by the first quality of service requirement. Optionally, the first feedback information further indicates the computing accuracy of the first compute node in performing the target task according to the first manner, or indicates a deviation between the computing accuracy of the first compute node in performing the target task according to the first manner and the computing accuracy indicated by the first quality of service requirement.

It may be understood that logic of sending the first feedback information by the second compute node and logic of sending the first feedback information by the third compute node are similar to logic of sending the first feedback information by the first compute node. Details are not described again.

It may be understood that the first feedback information sent by the second compute node may be different from the first feedback information sent by the third compute node. In addition, the second compute node and the third compute node do not necessarily send the first feedback information. For example, if the quality of service of the second compute node in performing the target task according to the first manner cannot meet the quality of service requirement of the second compute node, and the quality of service of the third compute node in performing the target task according to the first manner meets the quality of service requirement of the third compute node, the second compute node sends the first feedback information, and the third compute node does not send the first feedback information, and vice versa.

Optionally, the network node sends first condition information to the at least one compute node. The first condition information may indicate a condition for triggering the first feedback information. In this way, after receiving the first condition information, the at least one compute node may determine, based on the first condition information, whether to trigger the first feedback information, or determine when to trigger the first feedback information. The network node may send the first condition information to the at least one compute node before S503. For example, the network node may send the first condition information when sending the first scheduling information and the first quality of service requirement, or the network node may send the first condition information after S501 and before S502. This is not limited.

In a possible design, the condition for triggering the first feedback information includes at least one of the following: the quality of service of the at least one compute node in performing the target task according to the first manner does not meet the first quality of service requirement; the quality of service of the at least one compute node in performing the target task according to the first manner does not meet the first quality of service requirement, and a deviation between the two is greater than or equal to a first threshold; or a feedback moment indicated by the first condition information arrives. The following uses an example in which the first compute node sends the first feedback information for description.

For example, if the condition for triggering the first compute node to send the first feedback information includes: quality of service of the first compute node in performing the target task according to the first manner does not meet the first quality of service requirement, the first compute node may send the first feedback information to the network node when the quality of service of the first compute node in performing the target task according to the first manner does not meet the first quality of service requirement.

For example, if the condition for triggering the first compute node to send the first feedback information includes: quality of service of the first compute node in performing the target task according to the first manner does not meet the first quality of service requirement, and a deviation between the two is greater than or equal to a first threshold, the first compute node may send the first feedback information to the network node when the quality of service of the first compute node in performing the target task according to the first manner does not meet the first quality of service requirement and the deviation between the two is greater than or equal to the first threshold. For example, if actual computing energy consumption of the first compute node in performing the target task according to the first manner is greater than the computing energy consumption indicated by the first quality of service requirement, and a deviation between the two is greater than a first threshold corresponding to computing energy consumption, and/or actual computing amount of the first compute node in performing the target task according to the first manner is greater than the computing amount indicated by the first quality of service requirement, and a deviation between the two is greater than a first threshold corresponding to a computing amount, and/or actual computing delay of the first compute node in performing the target task according to the first manner is greater than the computing delay indicated by the first quality of service requirement, and a deviation between the two is greater than a first threshold corresponding to a computing delay, the first compute node sends the first feedback information to the network node, where the first feedback information may indicate at least one of the deviations.

For example, if the condition for triggering the first compute node to send the first feedback information includes: a feedback moment indicated by the first condition information arrives, the first compute node may indicate, to the network node when the feedback moment indicated by the first condition information arrives, a status of quality of service of the first compute node in performing the first subtask. For example, the first condition information indicates duration T1. After receiving the first condition information, the first compute node may start a timer, and duration of the timer is T1. When the timer expires, the first compute node sends the first feedback information to the network node. The first feedback information indicates the quality of service of the first compute node in performing the target task according to the first manner, and/or the first feedback information indicates whether the quality of service of the first compute node in performing the target task according to the first manner meets the first quality of service.

For example, if the condition for triggering the first compute node to send the first feedback information includes: quality of service of the first compute node in performing the target task according to the first manner does not meet the first quality of service requirement, and a feedback moment indicated by the first condition information arrives, the first compute node may send the first feedback information when the quality of service in performing the target task according to the first manner does not meet the first quality of service requirement, and/or the first compute node sends the first feedback information when the feedback moment indicated by the first condition information arrives.

It may be understood that logic of sending the first feedback information by the second compute node and the third compute node is similar to that of sending the first feedback information by the first compute node. For details, refer to the descriptions of sending the first feedback information by the first compute node. In addition, the first threshold corresponding to the second compute node, the threshold corresponding to the third compute node, and the threshold corresponding to the first compute node may be different, and the feedback moment corresponding to the second compute node, the feedback moment corresponding to the third compute node, and the feedback moment corresponding to the first compute node may be different.

S504: The network node determines a second scheduling result based on the first feedback information.

In this application, the second scheduling result may indicate a second manner according to which the at least one compute node performs the target task. The second manner is different from the first manner, and the second manner may indicate the at least one compute node to perform a second subtask in the target task. For example, the second scheduling result includes an identifier of the second subtask. It should be understood that the second scheduling result may alternatively indicate the at least one compute node to perform the entire target task. This is not limited.

Optionally, the network node may further determine a computing quality of service requirement corresponding to the second scheduling result, that is, a third quality of service requirement. The third quality of service requirement may indicate quality of service that needs to be met when the at least one compute node performs the target task according to the second manner. Content indicated by the third quality of service requirement is similar to content indicated by the first quality of service requirement. For details, refer to the foregoing descriptions of the first quality of service requirement. In addition, a process in which the network node determines the third quality of service requirement is similar to a process in which the network node determines the first quality of service requirement in the following embodiment. For details, refer to corresponding descriptions in the following S500b.

It may be understood that, for Scenario 1, the network node determines the second scheduling result based on the first feedback information sent by the first compute node. For Scenario 2, the network node determines the second scheduling result based on the first feedback information sent by the second compute node and/or the first feedback information sent by the third compute node. The following uses Scenario 1 as an example for specific description.

For example, if the first feedback information indicates that the computing type of the first compute node does not meet the computing type indicated by the first quality of service requirement, the network node may adjust the scheduling policy of the target task, so that a computing type of a subtask performed by the first compute node is a computing type supported by the first compute node. In other words, a computing type corresponding to the second subtask or a computing type indicated by the third quality of service is a computing type supported by the first compute node. For example, the target task is the task 2 shown in FIG. 1F. If the first scheduling result indicates the first compute node to perform S1 to S3, where a computing type corresponding to S1 and S2 is a CPU, a computing type corresponding to S3 is a GPU, and the first compute node supports a CPU but does not support a GPU, the second scheduling result indicates the first compute node to perform S1 and S2, and the computing type indicated by the third quality of service requirement is a CPU.

For example, if the first feedback information indicates that the computing amount of the first compute node in performing the target task according to the first manner does not meet the computing amount requirement indicated by the first quality of service requirement, or the first feedback information indicates that the computing amount of the first compute node in performing the target task according to the first manner does not meet the computing amount requirement indicated by the first quality of service requirement and the deviation between the two is greater than or equal to the first threshold, the network node may adjust the scheduling policy of the target task to a task split mode in which the first compute node has a small computation load. For example, a task workload performed by the first compute node is reduced, to avoid an excessively high computation load of the first compute node. In other words, a computation load of the first compute node in performing the target task according to the second manner is less than a computation load of the first compute node in performing the target task according to the first manner. Optionally, a computing amount requirement indicated by the third quality of service requirement is lower than or equal to the computing amount requirement indicated by the first quality of service requirement. For example, the target task is the task 2 shown in FIG. 1F. If the first scheduling result indicates the first compute node to perform S1 to S3, and the I/O bandwidth indicated by the first quality of service requirement is 5 Gbits/s, the second scheduling result may indicate the first compute node to perform S1 or S1 and S2, and an I/O bandwidth indicated by the third quality of service requirement is 3 Gbits/s.

For example, if the first feedback information indicates that the computing delay of the first compute node in performing the target task according to the first manner does not meet the computing delay requirement indicated by the first quality of service requirement, or the computing delay of the first compute node in performing the target task according to the first manner does not meet the computing delay requirement indicated by the first quality of service requirement and the deviation between the two is greater than or equal to the first threshold, the network node may adjust the scheduling policy of the target task to a task split mode in which the first compute node has a small computing delay. For example, some functions of the target task are disabled, computing accuracy is reduced, or a complex algorithm is replaced with a simple algorithm, to meet a computing delay requirement and ensure an end-to-end delay. For example, the first compute node is a cloud server. When the first compute node feeds back that the computing delay of the first compute node deviates from the delay indicated by the first quality of service requirement by more than 10 ms, the network node may indicate the first compute node to disable some rendering effect functions, for example, disable reflection rendering and/or dynamic diffuse global illumination (dynamic diffuse global illumination, DDGI) rendering. It may be understood that a computing delay of the first compute node in performing the target task according to the second manner is less than the computing delay of the first compute node in performing the target task according to the first manner. Optionally, a computing delay requirement indicated by the third quality of service requirement is lower than or equal to the computing delay requirement indicated by the first quality of service requirement.

For example, if the first feedback information indicates that the computing energy consumption of the first compute node in performing the target task according to the first manner does not meet the computing energy consumption requirement indicated by the first quality of service requirement, or the first feedback information indicates that the computing energy consumption of the first compute node in performing the target task according to the first manner does not meet the computing energy consumption requirement indicated by the first quality of service requirement and the deviation between the two is greater than or equal to the first threshold, the network node may adjust the scheduling policy of the target task to a task split mode in which the first compute node has low computing energy consumption. For example, a task workload performed by the first compute node is reduced, to avoid excessively high computing energy consumption of the first compute node. In other words, computing energy consumption of the first compute node in performing the target task according to the second manner is less than the computing energy consumption of the first compute node in performing the target task according to the first manner. Optionally, a computing energy consumption requirement indicated by the third quality of service requirement is lower than or equal to the computing energy consumption requirement indicated by the first quality of service requirement. For example, the target task is the task 2 shown in FIG. 1F. If the first scheduling result indicates the first compute node to perform S1 to S3, and the computing energy consumption indicated by the first quality of service requirement is 5 watts, the second scheduling result may indicate the first compute node to perform S1 or S1 and S2, and computing energy consumption indicated by the third quality of service requirement is 5 watts.

For example, if the first feedback information indicates that the computing accuracy of the first compute node in performing the target task according to the first manner does not meet the computing accuracy requirement indicated by the first quality of service requirement, or the first feedback information indicates that the computing accuracy of the first compute node in performing the target task according to the first manner does not meet the computing accuracy requirement indicated by the first quality of service requirement and the deviation between the two is greater than or equal to the first threshold, the network node may adjust the scheduling policy of the target task, so that the first compute node performs a subtask with low computing accuracy. In other words, computing accuracy of the first compute node in performing the target task according to the second manner is lower than the computing accuracy of the first compute node in performing the target task according to the first manner. Optionally, a computing accuracy requirement indicated by the third quality of service requirement is lower than the computing accuracy requirement indicated by the first quality of service requirement. For example, the target task is the task 2 shown in FIG. 1F. If the first scheduling result indicates the first compute node to perform S1 to S3, where a computing accuracy requirement of S1 is 10%, computing accuracy requirements of S2 and S3 are 3%, and the computing accuracy indicated by the first quality of service requirement is 3%, the second scheduling result may indicate the first compute node to perform S1, and computing accuracy indicated by the third quality of service requirement is 10%.

For example, if the first feedback information indicates that the computing amount of the first compute node in performing the target task according to the first manner does not meet the computing amount requirement indicated by the first quality of service requirement, and the computing delay of the first compute node in performing the target task according to the first manner does not meet the computing delay requirement indicated by the first quality of service requirement, the network node may adjust the scheduling policy of the target task to a task split mode in which the first compute node has a small computation load and a small computing delay.

It may be understood that, for Scenario 2, logic of determining the second scheduling result by the network node is similar to that in Scenario 1. A difference lies in that, when both the second compute node and the third compute node send the first feedback information, the network node needs to consider a case of the second compute node and a case of the third compute node.

For example, if the first feedback information sent by the second compute node indicates that the computing delay of the second compute node in performing the target task according to the first manner does not meet the computing delay requirement indicated by the quality of service requirement of the second compute node, and the first feedback information sent by the third compute node indicates that the computing energy consumption of the third compute node in performing the target task according to the first manner does not meet the computing energy consumption requirement indicated by the quality of service requirement of the third compute node, the network node may adjust the scheduling policy of the target task to a task split mode in which the second compute node has a small computing delay and the third compute node has low computing energy consumption.

Optionally, the network node may send the second scheduling result and the third quality of service requirement to the at least one compute node. Correspondingly, the at least one compute node receives the second scheduling result and the third quality of service requirement. Then, the at least one compute node may perform the target task based on the second scheduling result.

It may be understood that a compute node to which the network node sends the second scheduling result may be the same as or different from a compute node to which the network node sends the first scheduling result. For example, if the first scheduling result indicates the terminal to perform all subtasks of the target task, the network node sends the first scheduling result to the terminal. If the second scheduling result indicates the terminal and the cloud to respectively perform a part of subtasks of the target task, the network node sends the second scheduling result to the terminal and the cloud. For another example, if the first scheduling result indicates the terminal and the cloud to perform the target task according to the first manner, the network node sends the first scheduling result to the terminal and the cloud. If the second scheduling result indicates the terminal and the cloud to perform the target task according to the second manner, the network node sends the second scheduling result to the terminal and the cloud.

Optionally, if quality of service of the at least one compute node in performing the target task based on the second scheduling result does not meet the third quality of service requirement, the at least one compute node may send feedback information to the network node, so that the network device continues to adjust the scheduling policy of the target task based on the feedback information, to ensure computing quality of service of the target task.

Optionally, the network node may further send, to the at least one compute node, parameter information required for performing the target task based on the second scheduling result, for example, one or more of information about an AI model, information about an algorithm, or information about a program used for performing the target task.

Based on the method shown in FIG. 5, the network node may send the first scheduling result and the first quality of service requirement to the at least one compute node. After receiving the first scheduling result and the first quality of service requirement, the at least one compute node may perform the target task based on the first scheduling result, and send the first feedback information to the network node, to indicate that the quality of service in performing the target task based on the first scheduling result cannot meet the first quality of service requirement. After receiving the first feedback information, the network node may adjust the scheduling policy of the target task with reference to the first feedback information, so that an adjusted scheduling result (for example, the second scheduling result) is more suitable for the compute node, to ensure computing quality of service of the target task and improve user experience. It may be understood that the computational power of the compute node (for example, an available compute resource of the compute node) usually changes dynamically. By using the method shown in FIG. 5, the change may be fed back to the network node, so that the second scheduling result determined by the network node better conforms to an actual situation of the compute node, ensuring computing quality of service of the target task.

Optionally, in a possible implementation of the method shown in FIG. 5, the network node may further send a second quality of service requirement to a communication node, so that the communication node determines quality of service that needs to be provided by the communication node, and provides a corresponding transmission capability based on the quality of service. Specifically, as shown in FIG. 6, the method shown in FIG. 5 may further include the following steps.

S501a: The network node sends a second quality of service requirement to a communication node. Correspondingly, the communication node receives the second quality of service requirement from the network node.

In this application, the communication node may be a RAN node. Optionally, a function of the network node may be deployed on the RAN node.

In this application, the second quality of service requirement may indicate quality of service the communication node needs to provide. Optionally, the second quality of service requirement may indicate a quality of service requirement related to communication. For example, the second quality of service requirement may indicate at least one of the following: a packet delay budget (packet delay budget, PDB), a guaranteed bit rate (guaranteed bit rate, GBR), a guaranteed flow bit rate (guaranteed flow bit rate, GFBR), a maximum data burst volume (maximum data burst volume, MDBV), a packet error rate (packet error rate, PER), or a guaranteed transmitted data volume. It may be understood that the quality of service information may be a quality of service requirement corresponding to uplink transmission, a quality of service requirement corresponding to downlink transmission, or a quality of service requirement corresponding to both uplink transmission and downlink transmission. The PDB is used as an example. The PDB may be an uplink PDB, and indicates a PDB that needs to be met in uplink transmission. Alternatively, the PDB may be a downlink PDB, and indicates a PDB that needs to be met in downlink transmission. Alternatively, the PDB may be a sum of uplink and downlink PDBs, and indicates a total PDB that needs to be met in both uplink transmission and downlink transmission.

It should be understood that the foregoing requirements are merely examples of communication-related quality of service requirements that may be indicated by the second quality of service requirement. In specific application, the second quality of service requirement may indicate more or fewer quality of service requirements than those described above. This is not limited.

It may be understood that S501a may be performed before S501, may be performed after S501, or may be performed simultaneously with S501. This is not limited.

S503a: The communication node sends second feedback information to the network node. Correspondingly, the network node receives the second feedback information from the communication node.

In a possible implementation, if the quality of service provided by the communication node cannot meet the second quality of service requirement, the communication node sends the second feedback information to the network node. The second feedback information may indicate that the quality of service provided by the communication node cannot meet the second quality of service requirement. For example, the second feedback information includes 1 bit, and a value of the bit being "0" or "1" indicates that the quality of service provided by the communication node cannot meet the second quality of service requirement. The "quality of service provided by the communication node" herein may be quality of service detected by the communication node at a time, or quality of service collected in a time period or a periodicity, for example, an average value, a maximum value, or a minimum value of the quality of service collected in the time period or the periodicity.

Optionally, the second feedback information may indicate the quality of service provided by the communication node, so that the network node adjusts the scheduling policy of the target task based on the quality of service and the second quality of service requirement. For example, the second feedback information indicates a packet transmission delay provided by the communication node, and/or a bit rate provided by the communication node, and/or a flow bit rate provided by the communication node, and/or an MDBV provided by the communication node, and/or a PER provided by the communication node, and/or a guaranteed transmitted data volume provided by the communication node. Alternatively, the second feedback information further indicates a deviation between the quality of service provided by the communication node and the second quality of service requirement, so that the network node adjusts the scheduling policy of the target task based on the deviation.

For example, if the packet transmission delay provided by the communication node is greater than the PDB indicated by the second quality of service requirement, the second feedback information indicates that the packet transmission delay provided by the communication node does not meet the PDB indicated by the second quality of service requirement. Optionally, the second feedback information further indicates the packet transmission delay provided by the communication node or indicates a deviation between the packet transmission delay provided by the communication node and the PDB indicated by the second quality of service requirement. In addition/Alternatively, if the bit rate provided by the communication node is less than the GBR indicated by the second quality of service requirement, the second feedback information indicates that the bit rate provided by the communication node does not meet the GBR indicated by the second quality of service requirement. Optionally, the second feedback information further indicates the bit rate provided by the communication node or indicates a deviation between the bit rate provided by the communication node and the GBR indicated by the second quality of service requirement. In addition/Alternatively, if the flow bit rate provided by the communication node is less than the GFBR indicated by the second quality of service requirement, the second feedback information indicates that the flow bit rate provided by the communication node does not meet the GFBR indicated by the second quality of service requirement. Optionally, the second feedback information further indicates the flow bit rate provided by the communication node or indicates a deviation between the flow bit rate provided by the communication node and the GFBR indicated by the second quality of service requirement. In addition/Alternatively, if the MDBV provided by the communication node is less than the MDBV indicated by second quality of service requirement, the second feedback information indicates that the MDBV provided by the communication node does not meet the MDBV indicated by the second quality of service requirement. Optionally, the second feedback information further indicates the MDBV provided by the communication node or indicates a deviation between the MDBV provided by the communication node and the MDBV indicated by the second quality of service requirement. In addition/Alternatively, if the PER provided by the communication node is greater than the PER indicated by the second quality of service requirement, the second feedback information indicates that the PER provided by the communication node does not meet the PER indicated by the second quality of service requirement. Optionally, the second feedback information further indicates the PER provided by the communication node or indicates a deviation between the PER provided by the communication node and the PER indicated by the second quality of service requirement. In addition/Alternatively, if the transmitted data volume provided by the communication node is less than the guaranteed transmitted data volume indicated by the second quality of service requirement, the second feedback information indicates that the transmitted data volume provided by the communication node does not meet the guaranteed transmitted data volume indicated by the second quality of service requirement. Optionally, the second feedback information further indicates the transmitted data volume provided by the communication node or indicates a deviation between the transmitted data volume provided by the communication node and the guaranteed transmitted data volume indicated by the second quality of service requirement.

Optionally, the network node sends second condition information to the communication node. The second condition information may indicate a condition for triggering the second feedback information. In this way, after receiving the second condition information, the communication node may determine, based on the second condition information, whether to trigger the second feedback information, or determine when to trigger the second feedback information. The network node may send the second condition information to the communication node before S503a. For example, the network node may send the second condition information when sending the second quality of service requirement, or the network node may send the first condition information after S501a and before S502. This is not limited.

In a possible design, the condition for triggering the second feedback information includes at least one of the following: the quality of service provided by the communication node does not meet the second quality of service requirement; the quality of service provided by the communication node does not meet the second quality of service requirement, and a deviation between the two is greater than or equal to a second threshold; or a feedback moment indicated by the second condition information arrives.

For example, if the condition for triggering the communication node to send the second feedback information includes: the quality of service provided by the communication node does not meet the second quality of service requirement, the communication node may send the second feedback information to the network node when the quality of service provided by the communication node does not meet the second quality of service requirement.

For example, if the condition for triggering the communication node to send the second feedback information includes: the quality of service provided by the communication node does not meet the second quality of service requirement, and a deviation between the two is greater than or equal to a second threshold, the communication node may send the second feedback information to the network node when the quality of service provided by the communication node does not meet the second quality of service requirement, and the deviation between the two is greater than or equal to the second threshold. For example, if a packet transmission delay actually provided by the communication node is greater than the PDB indicated by the second quality of service requirement, and a deviation between the two is greater than a second threshold corresponding to a packet transmission delay, and/or a bit rate actually provided by the communication node is greater than the GBR indicated by the second quality of service requirement, and a deviation between the two is greater than a second threshold corresponding to a bit rate, and/or a flow bit rate actually provided by the communication node is greater than the GFBR indicated by the second quality of service requirement, and a deviation between the two is greater than a second threshold corresponding to a flow bit rate, and/or, an MDBV actually provided by the communication node is less than the MDBV indicated by the second quality of service requirement, and a deviation between the two is greater than a second threshold corresponding to an MDBV; and/or a PER actually provided by the communication node is greater than the PER indicated by the second quality of service requirement, and a deviation between the two is greater than a second threshold corresponding to a PER, the communication node sends the second feedback information to the network node, where the second feedback information may indicate at least one of the deviations.

For example, if the condition for triggering the communication node to send the second feedback information includes: a feedback moment indicated by the second condition information arrives, the communication node may indicate, to the network node when the feedback moment indicated by the second condition information arrives, a status of the quality of service provided by the communication node. For example, the second condition information indicates duration T2. After receiving the second condition information, the communication node may start a timer, and duration of the timer is T2. When the timer expires, the communication node sends the second feedback information to the network node. The second feedback information indicates the quality of service provided by the communication node, and/or the second feedback information indicates whether the quality of service provided by the communication node meets the second quality of service.

For example, if the condition for triggering the communication node to send the second feedback information includes: the quality of service provided by the communication node does not meet the second quality of service requirement, a deviation between the two is greater than or equal to a second threshold, and a feedback moment indicated by the second condition information arrives, the communication node may send the second feedback information when the provided quality of service does not meet the second quality of service requirement and the deviation between the two is greater than or equal to the second threshold, and/or the communication node sends the second feedback information when the feedback moment indicated by the second condition information arrives.

It may be understood that S503a may be performed before S503, may be performed after S503, or may be performed simultaneously with S503. This is not limited.

It may be understood that if the communication node sends the second feedback information to the network node, and the at least one compute node does not send the first feedback information to the network node, the network node may determine the second scheduling result based on the second feedback information. In this way, an adjusted scheduling result (for example, the second scheduling result) can better adapt to a current communication capability of the network, to ensure communication quality of service of the target task and improve user experience.

Optionally, the network node may further determine a communication quality of service requirement corresponding to the second scheduling result, that is, a fourth quality of service requirement. The fourth quality of service requirement may indicate quality of service that needs to be met by the communication node when the at least one compute node performs the target task based on the second scheduling result. Content indicated by the fourth quality of service requirement is similar to content indicated by the second quality of service requirement. For details, refer to the foregoing descriptions of the second quality of service requirement. In addition, a process in which the network node determines the fourth quality of service requirement is similar to a process in which the network node determines the second quality of service requirement in the following embodiment. For details, refer to corresponding descriptions in the following S500b.

For example, if the second feedback information indicates that the packet transmission delay provided by the communication node does not meet the PDB indicated by the second quality of service requirement, the network node may adjust the scheduling policy of the target task to a task split mode having a more relaxed requirement on a network PDB. For example, the quantity of the at least one compute node is increased, to meet a delay requirement. In other words, a PDB indicated by the fourth quality of service requirement is greater than the PDB indicated by the second quality of service requirement. For example, the target task is a video rendering task. If the first scheduling result indicates that the first compute node performs the entire video rendering task, and the second quality of service requirement indicates that the PDB is 30 ms, the second scheduling result may indicate that the first compute node and one or more nodes other than the first compute node collaboratively perform the video rendering task, and a PDB indicated by the fourth quality of service requirement is 50 ms.

For example, if the second feedback information indicates that the bit rate provided by the communication node does not meet the GBR indicated by the second quality of service requirement, the network node may adjust the scheduling policy of the target task to a task split mode having a more relaxed requirement on a network GBR. For example, the scheduling policy of the target task is adjusted from the full cloud rendering mode in Table 1 to a device-cloud collaborative rendering mode, to meet a transmission rate requirement. In other words, a GBR indicated by the fourth quality of service requirement is less than the GBR indicated by the second quality of service requirement.

For example, if the second feedback information indicates that the flow bit rate provided by the communication node does not meet the GFBR indicated by the second quality of service requirement, the network node may adjust the scheduling policy of the target task to a task split mode having a more relaxed requirement on a network GFBR. For example, the scheduling policy of the target task is adjusted from the candidate split point 1 to the candidate split point 2 in Table 2, to meet a transmission rate requirement. In other words, a GFBR indicated by the fourth quality of service requirement is less than the GFBR indicated by the second quality of service requirement.

For example, if the second feedback information indicates that the MDBV provided by the communication node does not meet the MDBV indicated by the second quality of service requirement, the network node may adjust the scheduling policy of the target task to a task split mode having a more relaxed requirement on a network MDBV. For example, the scheduling policy of the target task is adjusted from 4K image rendering to 2K image rendering, to meet a data volume requirement. In other words, a MDBV indicated by the fourth quality of service requirement is less than the MDBV indicated by the second quality of service requirement.

For example, if the second feedback information indicates that the PER provided by the communication node does not meet the PER indicated by the second quality of service requirement, the network node may adjust the scheduling policy of the target task to a task split mode having a more relaxed requirement on a network PER. For example, the scheduling policy of the target task is adjusted from rendering with a frame rate of 90 fps to rendering with a frame rate of 60 fps, to meet a PER requirement. In other words, a PER indicated by the fourth quality of service requirement is greater than the PER indicated by the second quality of service requirement.

For example, if the second feedback information indicates that the transmitted data volume provided by the communication node does not meet the guaranteed transmitted data volume indicated by the second quality of service requirement, the network node may adjust the scheduling policy of the target task to a task split mode having a more relaxed requirement on a transmitted data volume of the network. For example, the scheduling policy of the target task is adjusted from enabling DDGI rendering in the cloud to disabling DDGI rendering in the cloud, to meet a transmitted data volume requirement. In other words, a guaranteed transmitted data volume indicated by the fourth quality of service requirement is less than the guaranteed transmitted data volume indicated by the second quality of service requirement.

It may be understood that if the communication node sends the second feedback information to the network node, and the at least one compute node sends the first feedback information to the network node, the network node may determine the second scheduling result with reference to the first feedback information and the second feedback information. For example, S504 may be replaced with the following steps.

S504a: The network node determines a second scheduling result based on the first feedback information and the second feedback information.

It may be understood that, logic of determining the second scheduling result by the network node based on the first feedback information and the second feedback information is similar to logic of determining the second scheduling result by the network node based on the first feedback information or the second feedback information. A difference lies in that, in S504a, the network node needs to consider not only the first feedback information but also the second feedback information.

For example, if the first feedback information indicates that the computing energy consumption of the first compute node in performing the target task according to the first manner does not meet the computing energy consumption requirement indicated by the first quality of service requirement, and the second feedback information indicates that the packet transmission delay provided by the communication node does not meet the PDB indicated by the second quality of service requirement, the network node may adjust the scheduling policy of the target task to a task split mode in which the first compute node has low computing energy consumption and a requirement on a network PDB is more relaxed, to avoid excessively high computing energy consumption of the first compute node and meet a delay requirement.

It may be understood that, a channel state usually changes dynamically, and therefore, the quality of service provided by the communication node also changes dynamically. The communication node may feed back the change to the network node by sending the second feedback information to the network node, so that the second scheduling result determined by the network node better conforms to an actual situation of the communication node, ensuring communication quality of service of the target task.

Optionally, the network node may send the fourth quality of service requirement to the communication node. Correspondingly, the communication node receives the fourth quality of service requirement.

Optionally, if the quality of service provided by the communication node does not meet the fourth quality of service requirement, the communication node may send feedback information to the network node, so that the network device continues to adjust the scheduling policy of the target task based on the feedback information, to ensure communication quality of service of the target task.

Optionally, in a possible implementation of the method shown in FIG. 5, the network node may obtain a network status, a quality of service requirement of the target task, and computational power of the at least one compute node, to determine the first scheduling result based on the information. Specifically, as shown in FIG. 6, the method shown in FIG. 5 further includes the following steps.

S500a: The network node obtains a network status, a quality of service requirement of the target task, and computational power of the at least one compute node.

In this application, the network status may indicate one or more of a current PDB, GBR, GFBR, MDBV, PER, or guaranteed transmitted data volume of the network. The information may be a network status of uplink transmission, a network status of downlink transmission, or a combined network status of uplink transmission and downlink transmission. In addition, the foregoing information is merely an example of the network status. In specific application, the network status may further include more or less information than the foregoing information. For example, the network status further indicates information such as an uplink/downlink channel state, an uplink/downlink available bandwidth resource, or an uplink/downlink network congestion status. The congestion status information may be information related to a queue length of data packets in a layer 1 or layer 2 protocol stack on a RAN side, for example, buffer status report (buffer state report, BSR)-related information.

In this application, the quality of service requirement of the target task may include a communication quality of service requirement of the target task and a computing quality of service requirement of the target task. The communication quality of service requirement of the target task may indicate at least one of the following: a PDB of the target task, a GBR of the target task, a GFBR of the target task, an MDBV of the target task, a PER of the target task, or a guaranteed transmitted data volume of the target task. Alternatively, the communication quality of service requirement of the target task may indicate at least one of the following: a PDB of each subtask in the target task, a GBR of each subtask in the target task, a GFBR of each subtask in the target task, an MDBV of each subtask in the target task, a PER of each subtask in the target task, or a guaranteed transmitted data volume of each subtask in the target task.

The computing quality of service requirement of the target task may indicate at least one of the following: a computing type requirement of the target task, a computing amount requirement of the target task, a computing delay requirement of the target task, a computing energy consumption requirement of the target task, or a computing accuracy requirement of the target task. Alternatively, the computing quality of service requirement of the target task may indicate at least one of the following: a computing type requirement of each subtask in the target task, a computing amount requirement of each subtask in the target task, a computing delay requirement of each subtask in the target task, a computing energy consumption requirement of each subtask in the target task, or a computing accuracy requirement of each subtask in the target task. For the descriptions of the computing type requirement, the computing amount requirement, the computing delay requirement, the computing energy consumption requirement, or the computing accuracy requirement, refer to the foregoing descriptions.

In this application, the computational power of the at least one compute node may indicate at least one of the following: a computing type supported by the at least one compute node, a computing amount supported by the at least one compute node, a computing delay supported by the at least one compute node, computing energy consumption supported by the at least one compute node, or computing accuracy supported by the at least one compute node.

In a possible implementation, the network node may periodically or irregularly detect the network status, to obtain a latest network status. Alternatively, the RAN node periodically reports the latest network status to the network node. Alternatively, the network node triggers the RAN node to report the latest network status to the network node.

In a possible implementation, the at least one compute node periodically reports the computational power of the at least one compute node to the network node. Alternatively, the network node triggers the at least one compute node to report the computational power of the at least one compute node to the network node.

In a possible implementation, a compute node, such as the terminal or the application server, in the at least one compute node sends the quality of service requirement of the target task to the network node. For example, the first compute node, the second compute node, or the third compute node sends a computing service request to the network node. The computing service request includes quality of service requirement information of the target task. After receiving the computing service request, the network node may obtain the quality of service requirement of the target task. Alternatively, the network node obtains the quality of service requirement of the target task from a core network element. For example, the first compute node, the second compute node, or the third compute node sends a computing service request to the network node. The computing service request includes a service identifier corresponding to the target task. After receiving the computing service request, the network node obtains the quality of service requirement of the target task based on the service identifier. For example, the network node sends the service identifier to a PCF network element, and the PCF network element may locally obtain the quality of service requirement of the target task based on the service identifier, or the PCF network element obtains the quality of service requirement of the target task from the application server based on the service identifier. Then, the PCF network element may send the quality of service requirement of the target task to the network node.

The service identifier may indicate a service corresponding to the target task, for example, a rendering service or an image recognition service. One service may correspond to one or more tasks. For example, the rendering service may correspond to multiple rendering tasks that use different rendering manners.

S500b: The network node determines the first scheduling result based on the network status, the quality of service requirement of the target task, and the computational power of the at least one compute node.

In a possible design, there is a correspondence between a manner according to which the at least one compute node performs the target task, that is, a manner in which the target task is split, and different network statuses and different computational power of the compute nodes. The network node may determine the first scheduling result based on the information obtained in S500b and the foregoing correspondence.

In an example, the network node may determine, based on the correspondence, at least one split manner of the target task that meets the network status and the computational power of the at least one compute node, determine, in these split manners, a split manner that meets the quality of service requirement of the target task, and determine the split manner as the first scheduling result. It may be understood that, if multiple split manners meet the quality of service requirement of the target task, the network node may select one of the split manners as the first scheduling result, or the network node indicates the multiple split manners to the at least one compute node, and the at least one compute node determines the first scheduling result.

For example, the target task may be performed by a compute node 1 and a compute node 2, the network status includes an uplink PDB, and the computational power of the compute node includes computing energy consumption. The foregoing correspondence may be shown in Table 4. If the network status indicates that the current uplink PDB of the network is 20 ms, the computing energy consumption supported by the compute node 1 is 3 watts, and the computing energy consumption supported by the compute node 2 is 5 watts, it may be determined, according to Table 4, that the split manners of the target task that meet the network status, the computational power of the compute node 1, and the computational power of the compute node 2 include the split manner 1 to the split manner 3. Subsequently, the network node may determine, in the split manner 1 to the split manner 3, a split manner that meets the quality of service requirement of the target task. For example, if the communication quality of service of the target task indicates that the PDB is 45 ms, and the computing quality of service of the target task indicates that the total computing energy consumption of the target task is 8 watts, it may be determined, according to Table 4, that split manners meeting the quality of service requirement of the target task are the split manner 2 and the split manner 3. The network node may determine the split manner 2 or the split manner 3 as the first scheduling result, or the network node may indicate the two split manners to the compute node 1 or the compute node 2. The compute node 1 or the compute node 2 determines the first scheduling result, or the compute node 1 or the compute node 2 negotiates the first scheduling result. For example, the compute node 1 may be the terminal, and the compute node 2 may be the cloud. In the split manner 1, neither the terminal nor the cloud performs DDGI rendering. In the split manner 2, the terminal performs DDGI rendering, and the cloud does not perform DDGI rendering. In the split manner 3, the cloud performs DDGI rendering, and the terminal does not perform DDGI rendering.

**Table 4**

| Uplink PDB | Computing energy consumption of the compute node 1 | Computing energy consumption of the compute node 2 | Split manner of the target task |
|---|---|---|---|
| 50 ms | 2 watts | 3 watts | Split manner 1 |
| 40 ms | 1.5 watts | 4 watts | Split manner 2 |
| 30 ms | 1 watt | 5 watts | Split manner 3 |

It may be understood that Table 4 is merely an example of a correspondence between split manners of the target task and different network statuses and different computational power of the compute nodes. In specific application, the correspondence may alternatively be in another form, or may include more or fewer rows/columns than those in Table 4. This is not limited.

In another example, the network node may determine, based on the foregoing correspondence, at least one split manner that meets the quality of service requirement of the target task, determine, in these split manners, a split manner that meets the network status and the computational power of the at least one compute node, and determine the split manner as the first scheduling result. It may be understood that if multiple split manners meet the network status and the computational power of the at least one compute node, the network node may select one of the split manners as the first scheduling result, or the network node indicates the multiple split manners to the at least one compute node, and the at least one compute node determines the first scheduling result.

The correspondence shown in Table 4 is still used as an example. If the communication quality of service of the target task indicates that the PDB is 45 ms, and the computing quality of service of the target task indicates that the total computing energy consumption of the target task is 8 watts, it may be determined, according to Table 4, that split manners meeting the quality of service requirement of the target task are the split manner 2 and the split manner 3. Subsequently, the network node may determine, in the split manner 1 and the split manner 2, a split manner that meets the network status, the computational power of the compute node 1, and the computational power of the compute node 2. For example, if the network status indicates that the current uplink PDB of the network is 35 ms, the computing energy consumption supported by the compute node 1 is 3 watts, and the computing energy consumption supported by the compute node 2 is 5 watts, it may be determined, according to Table 4, that the split manner meeting the network status, the computational power of the compute node 1, and the computational power of the compute node 2 is the split manner 3, and the network node may determine the split manner 3 as the first scheduling result.

In a possible implementation, the network node may determine the first quality of service requirement based on the computing quality of service requirement of the target task and the computational power of the at least one compute node. For example, after determining the first scheduling result, the network node may determine the first quality of service requirement based on the computing quality of service requirement of the target task, the computational power of the at least one compute node, and the first scheduling result. It may be understood that the at least one compute node has a capability of providing the first quality of service requirement.

It may be understood that the first quality of service requirement may indicate a group of quality of service requirements (for example, the group of quality of service requirements indicates at least one of the following: a computing type requirement, a computing amount requirement, a computing delay requirement, a computing energy consumption requirement, or a computing accuracy requirement), and the at least one compute node needs to meet the group of quality of service requirements when performing the target task according to the first manner. Alternatively, the first quality of service requirement may indicate multiple groups of quality of service requirements (for example, each group of quality of service requirements indicates at least one of the following: a computing type requirement, a computing amount requirement, a computing delay requirement, a computing energy consumption requirement, or a computing accuracy requirement), and the at least one compute node needs to meet at least one group of the multiple groups of quality of service requirements when performing the target task according to the first manner.

Table 4 is still used as an example. If the communication quality of service of the target task indicates that the PDB is 45 ms, the computing quality of service of the target task indicates that the total computing energy consumption of the target task is 8 watts, the first scheduling result indicates the split manner 3, and the first quality of service requirement indicates one group of quality of service requirements, the first quality of service requirement sent to the compute node 1 may indicate that the computing energy consumption of the compute node 1 is less than 3 watts, and the first quality of service requirement sent to the compute node 2 may indicate that the computing energy consumption of the compute node 2 is less than 5 watts. Therefore, the computing energy consumption of the compute node 1 in performing the target task according to the first manner needs to be less than 3 watts, and the computing energy consumption of the compute node 2 in performing the target task according to the first manner needs to be less than 5 watts. Alternatively, the first quality of service requirement sent to the compute node 1 may indicate that the computing energy consumption of the compute node 1 is less than or equal to 2 watts, and the first quality of service requirement sent to the compute node 2 may indicate that the computing energy consumption of the compute node 2 is less than 6 watts. Therefore, the computing energy consumption of the compute node 1 in performing the target task according to the first manner needs to be less than or equal to 2 watts, and the computing energy consumption of the compute node 2 in performing the target task according to the first manner needs to be less than 6 watts.

Table 4 is still used as an example. If the communication quality of service of the target task indicates that the PDB is 45 ms, the computing quality of service of the target task indicates that the total computing energy consumption of the target task is 8 watts, the first scheduling result indicates the split manner 3, and the first quality of service requirement indicates two groups of quality of service requirements, the first quality of service requirement sent to the compute node 1 may indicate that the computing energy consumption of the compute node 1 is less than or equal to 2 watts or less than or equal to 1.5 watts, and the first quality of service requirement sent to the compute node 2 may indicate that the computing energy consumption of the compute node 2 is less than 6 watts or less than or equal to 5.5 watts. Therefore, the computing energy consumption of the compute node 1 in performing the target task according to the first manner needs to be less than or equal to 2 watts or less than or equal to 1.5 watts, and the computing energy consumption of the compute node 2 in performing the target task according to the first manner needs to be less than 6 watts or less than or equal to 5.5 watts.

In a possible implementation, the network node may determine the second quality of service requirement based on the network status and the communication quality of service requirement of the target task. For example, after determining the first scheduling result, the network node may determine the second quality of service requirement based on the network status, the computing quality of service requirement of the target task, and the first scheduling result. It may be understood that the communication node has a capability of providing the second quality of service requirement.

It may be understood that the second quality of service requirement may indicate a group of quality of service requirements (for example, the group of quality of service requirements indicates at least one of the following: a PDB, a GBR, a GFBR, an MDBV, a PER, or a guaranteed transmitted data volume), and the communication node needs to provide quality of service indicated by the group of quality of service requirements. Alternatively, the second quality of service requirement may indicate multiple groups of quality of service requirements (for example, each group of quality of service requirements indicates at least one of the following: a PDB, a GBR, a GFBR, an MDBV, a PER, or a guaranteed transmitted data volume), and the communication node needs to provide quality of service indicated by at least one group of the multiple groups of quality of service requirements.

Table 4 is still used as an example. If the communication quality of service of the target task indicates that the PDB is 45 ms, the computing quality of service of the target task indicates that the total computing energy consumption of the target task is 8 watts, the first scheduling result indicates the split manner 3, and the second quality of service requirement indicates one group of quality of service requirements, the second quality of service requirement may indicate that the uplink PDB is less than 45 ms. Therefore, the uplink PDB to be provided by the communication node needs to be less than 45 ms. Alternatively, the second quality of service requirement may indicate that the uplink PDB is less than or equal to 30 ms. Therefore, the uplink PDB to be provided by the communication node needs to be less than or equal to 30 ms. Alternatively, the second quality of service requirement may indicate that the uplink PDB is less than or equal to 35 ms. Therefore, the uplink PDB to be provided by the communication node needs to be less than or equal to 35 ms. If the first scheduling result indicates the split manner 2, the second quality of service requirement may indicate that the uplink PDB is less than 45 ms. Therefore, the uplink PDB to be provided by the communication node needs to be less than 45 ms. Alternatively, the second quality of service requirement may indicate that the uplink PDB is less than or equal to 40 ms. Therefore, the uplink PDB to be provided by the communication node needs to be less than or equal to 40 ms. Alternatively, the second quality of service requirement may indicate that the uplink PDB is less than or equal to 42 ms. Therefore, the uplink PDB to be provided by the communication node needs to be less than or equal to 42 ms.

Table 4 is still used as an example. If the communication quality of service of the target task indicates that the PDB is 45 ms, the computing quality of service of the target task indicates that the total computing energy consumption of the target task is 8 watts, the first scheduling result indicates the split manner 3, and the second quality of service requirement indicates two groups of quality of service requirements, the second quality of service requirement may indicate that the uplink PDB is less than 45 ms or less than or equal to 30 ms. Therefore, the uplink PDB to be provided by the communication node needs to be less than 45 ms or less than or equal to 30 ms.

It may be understood that the target task in this application may be alternatively replaced with a service traffic mode, for example, a service bit rate, resolution, or frame rate. Scheduling the target task may be understood as adjusting the service traffic mode, for example, adjusting the service bit rate, resolution, or frame rate. Different service traffic patterns may also have different communication quality of service requirements and/or computing quality of service requirements. In other words, a service process pattern may be determined by using the method provided in this application.

It may be understood that actions of the network node, the compute node, or the communication node in the foregoing steps may be performed by the processor 401 in the communication apparatus 40 shown in FIG. 4 by invoking the application program code stored in the memory 403. This is not limited in this application.

Embodiments mentioned above in this application may be combined when the solutions do not conflict. This is not limited.

The foregoing mainly describes the solutions provided in this application from a perspective of interaction between nodes. Correspondingly, this application further provides a communication apparatus. The communication apparatus may be the network node in the foregoing method embodiments, an apparatus including the foregoing network node, or a component that can be used in the network node. Alternatively, the communication apparatus may be the compute node in the foregoing method embodiments, an apparatus including the foregoing compute node, or a component that can be used in the compute node. It may be understood that to implement the foregoing functions, the foregoing network node or compute node includes corresponding hardware structures and/or software modules for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the network node or compute node may be divided into functional modules based on the foregoing method examples. For example, the functional modules corresponding to the functions may be obtained through division, or two or more functions may be integrated into one processing module. The integrated module may be implemented in a form of hardware, or may be implemented in a form of a software functional module. It may be understood that division into the modules in this application is an example, and is merely logical function division. In actual implementation, another division manner may be used.

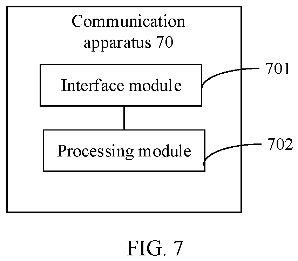

For example, when the functional modules are obtained through division in an integrated manner, FIG. 7 is a diagram of a structure of a communication apparatus 70. The communication apparatus 70 includes an interface module 701 and a processing module 702. The interface module 701 may also be referred to as an interface unit configured to perform sending and receiving operations, and may be, for example, an interface circuit, a transceiver machine, a transceiver, or a communication interface. The processing module 702 may also be referred to as a processing unit configured to perform an operation other than the sending and receiving operations, and may be, for example, a processing circuit or a processor.

In some embodiments, the communication apparatus 70 may further include a storage module (not shown in FIG. 7) configured to store program instructions and data.

In some embodiments, the communication apparatus 70 may further include an AI module (not shown in FIG. 7) configured to implement an AI-related function. The AI module may implement an AI function by using software, hardware, or a combination of software and hardware. For example, the AI module includes an RIC module. Optionally, the AI module and the storage module are integrated into one module, or the AI module and the processing module 702 are integrated into one module.

For example, the communication apparatus 70 is configured to implement a function of a network node. For example, the communication apparatus 70 is the network node in the embodiment shown in FIG. 5 or the embodiment shown in FIG. 6.

The interface module 701 is configured to send a first scheduling result and a first quality of service requirement to at least one compute node. The first scheduling result may indicate a first manner according to which the at least one compute node performs a target task. For example, the interface module 701 may be configured to perform S501.

The interface module 701 is further configured to receive first feedback information from the at least one compute node. The first feedback information may indicate that quality of service of the at least one compute node in performing the target task according to the first manner cannot meet the first quality of service requirement. For example, the interface module 701 may be further configured to perform S503.

The processing module 702 is configured to determine a second scheduling result based on the first feedback information. The second scheduling result may indicate a second manner according to which the at least one compute node performs the target task, and the second manner may be different from the first manner. For example, the processing module 702 may be configured to perform S504.

In a possible implementation, the interface module 701 is further configured to send first condition information, where the first condition information indicates a condition for triggering the first feedback information.

In a possible implementation, the condition for triggering the first feedback information includes at least one of the following: the quality of service of the at least one compute node in performing the target task according to the first manner does not meet the first quality of service requirement; or the quality of service of the at least one compute node in performing the target task according to the first manner does not meet the first quality of service requirement, and a deviation between the two is greater than or equal to a first threshold; or a feedback moment indicated by the first condition information arrives.

In a possible implementation, the processing module 702 is further configured to determine the first quality of service requirement based on a computing quality of service requirement of the target task and computational power of the at least one compute node.

In a possible implementation, the computing quality of service requirement of the target task or the first quality of service requirement indicates at least one of the following: a computing type requirement, a computing amount requirement, a computing delay requirement, a computing energy consumption requirement, or a computing accuracy requirement.

In a possible implementation, the interface module 701 is further configured to send a second quality of service requirement to a communication node; the interface module 701 is further configured to receive second feedback information from the communication node, where the second feedback information indicates that quality of service provided by the communication node cannot meet the second quality of service requirement; and the processing module 702 is specifically configured to determine the second scheduling result based on the first feedback information and the second feedback information.

In a possible implementation, the interface module 701 is further configured to send second condition information, where the second condition information indicates a condition for triggering the second feedback information.

In a possible implementation, the condition for triggering the second feedback information includes at least one of the following: the quality of service provided by the communication node cannot meet the second quality of service requirement; the quality of service provided by the communication node cannot meet the second quality of service requirement, and a deviation between the two is greater than or equal to a second threshold; or a feedback moment indicated by the second condition information arrives.

In a possible implementation, the processing module 702 is further configured to determine the second quality of service requirement based on a network status and a communication quality of service requirement of the target task.

In a possible implementation, the communication quality of service requirement of the target task or the second quality of service requirement indicates at least one of the following: a packet delay budget, a guaranteed bit rate, a guaranteed flow bit rate, a maximum data burst volume, a packet error rate, or a guaranteed transmitted data volume.

In a possible implementation, the processing module 702 is further configured to obtain a network status, a quality of service requirement of the target task, and the computational power of the at least one compute node, where the quality of service requirement of the target task includes the communication quality of service requirement of the target task and the computing quality of service requirement of the target task; and the processing module 702 is further configured to determine the first scheduling result based on the network status, the quality of service requirement of the target task, and the computational power of the at least one compute node.

In a possible implementation, the processing module 702 is specifically configured to receive a computing service request through the interface module 701, where the computing service request includes quality of service requirement information of the target task.

In a possible implementation, the processing module 702 is specifically configured to receive a computing service request through the interface module 701, where the computing service request includes a service identifier corresponding to the target task; and the processing module 702 is further specifically configured to obtain the quality of service requirement of the target task based on the service identifier.

In a possible implementation, the interface module 701 is further configured to send the second scheduling result.

In a possible implementation, the communication apparatus 70 is a radio access network node, a central unit, a distributed unit, a radio access network intelligent controller, or a core network element.

In a possible implementation, the first manner indicates the at least one compute node to perform a first subtask in the target task, and the second manner indicates the at least one compute node to perform a second subtask in the target task.

When the communication apparatus 70 is configured to implement functions of the network node, for other functions that can be implemented by the communication apparatus 70, refer to the related descriptions in the embodiment shown in FIG. 5 or the embodiment shown in FIG. 6. Details are not described again herein.

Alternatively, for example, the communication apparatus 70 is configured to implement functions of a compute node. For example, the communication apparatus 70 is a compute node in the at least one compute node in the embodiment shown in FIG. 5 or the embodiment shown in FIG. 6.

The interface module 701 is configured to receive a first scheduling result and a first quality of service requirement. The first scheduling result indicates a first manner according to which at least one compute node performs a target task. For example, the interface module 701 may be configured to perform S501.

The processing module 702 is configured to perform the target task according to the first manner. For example, the processing module 702 may be configured to perform S502.

The interface module 701 is further configured to send first feedback information. The first feedback information indicates that quality of service in performing the target task according to the first manner cannot meet the first quality of service requirement. For example, the interface module 701 may be further configured to perform S503.

In a possible implementation, the interface module 701 is further configured to receive first condition information, where the first condition information indicates a condition for triggering the first feedback information.

In a possible implementation, the condition for triggering the first feedback information includes at least one of the following: the quality of service in performing the target task according to the first manner does not meet the first quality of service requirement; the quality of service in performing the target task according to the first manner does not meet the first quality of service requirement, and a deviation between the two is greater than or equal to a first threshold; or a feedback moment indicated by the first condition information arrives.

In a possible implementation, the first quality of service requirement indicates at least one of the following: a computing type requirement, a computing amount requirement, a computing delay requirement, a computing energy consumption requirement, or a computing accuracy requirement.

In a possible implementation, the interface module 701 is further configured to send a computing service request, where the computing service request includes at least one of quality of service requirement information of the target task or a service identifier corresponding to the target task.

In a possible implementation, the interface module 701 is further configured to receive a second scheduling result, where the second scheduling result indicates a second manner according to which the at least one compute node performs the target task, and the second manner is different from the first manner; and the processing module 702 is further configured to perform the target task based on the second scheduling result.

In a possible implementation, the first manner indicates the at least one compute node to perform a first subtask in the target task, and the second manner indicates the at least one compute node to perform a second subtask in the target task.

When the communication apparatus 70 is configured to implement functions of the compute node, for other functions that can be implemented by the communication apparatus 70, refer to the related descriptions in the embodiment shown in FIG. 5 or the embodiment shown in FIG. 6. Details are not described again herein.

In a simple embodiment, a person skilled in the art may figure out that the communication apparatus 70 may be in the form shown in FIG. 4. For example, the processor 401 in FIG. 4 may invoke the computer-executable instructions stored in the memory 403, to cause the communication apparatus 70 to perform the method in the foregoing embodiments.

For example, the functions/implementation processes of the interface module 701 and the processing module 702 in FIG. 7 may be implemented by the processor 401 in FIG. 4 by invoking the computer-executable instructions stored in the memory 403. Alternatively, the function/implementation process of the processing module 702 in FIG. 7 may be implemented by the processor 401 in FIG. 4 by invoking the computer-executable instructions stored in the memory 403, and the function/implementation process of the interface module 701 in FIG. 7 may be implemented by using the communication interface 404 in FIG. 4.

It may be understood that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built in an SoC (system-on-chip) or an ASIC, or may be an independent semiconductor chip. In addition to the core for executing software instructions to perform operations or processing, the processor may further include a necessary hardware accelerator, such as a field programmable gate array (field programmable gate array, FPGA), a PLD (programmable logic device), or a logic circuit that implements special logic operations.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete component, and the hardware may run necessary software or does not depend on software to perform the foregoing method procedures.

Optionally, this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, the chip system further includes the memory. Optionally, the chip system may include a chip, or may include a chip and another discrete component. This is not specifically limited in this application.

Optionally, this application further provides a computer-readable storage medium. All or some of the procedures in the foregoing method embodiments may be implemented by a computer program instructing related hardware. The program may be stored in the computer-readable storage medium. When the program is executed, the procedures in the foregoing method embodiments may be included. The computer-readable storage medium may be an internal storage unit of the communication apparatus in any one of the foregoing embodiments, for example, a hard disk drive or a memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or some of the procedures in the foregoing method embodiments may be implemented by a computer program instructing related hardware. The program may be stored in the computer program product. When the program is executed, the procedures in the foregoing method embodiments may be included.

Optionally, this application further provides computer instructions. All or some of the procedures in the foregoing method embodiments may be implemented by computer instructions instructing related hardware (for example, a computer, a processor, a network node, or a compute node). The program may be stored in the computer-readable storage medium or the computer program product.

Optionally, this application further provides a communication system, including at least two of the following nodes: the network node, the at least one compute node, or the communication node in the foregoing embodiments.

The foregoing descriptions about implementations allow a person skilled in the art to understand that, for the purpose of convenient and brief description, division of the foregoing functional modules is taken as an example for illustration. In actual application, the foregoing functions can be allocated to different functional modules for implementation according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division. In actual implementation, another division manner may be used. For example, multiple units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate parts may or may not be physically separate, and parts displayed as units may be one or more physical units, may be located in one place, or may be distributed in different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
sending a first scheduling result and a first quality of service requirement to at least one compute node, wherein the first scheduling result indicates a first manner according to which the at least one compute node performs a target task;
receiving first feedback information of the at least one compute node, wherein the first feedback information indicates that quality of service of the at least one compute node in performing the target task according to the first manner cannot meet the first quality of service requirement; and
determining a second scheduling result based on the first feedback information, wherein the second scheduling result indicates a second manner according to which the at least one compute node performs the target task, and the second manner is different from the first manner.

2. The method according to claim 1, wherein the method further comprises:
sending first condition information, wherein the first condition information indicates a condition for triggering the first feedback information.

3. The method according to claim 2, wherein the condition for triggering the first feedback information comprises at least one of the following:
the quality of service of the at least one compute node in performing the target task according to the first manner does not meet the first quality of service requirement;
the quality of service of the at least one compute node in performing the target task according to the first manner does not meet the first quality of service requirement, and a deviation between the two is greater than or equal to a first threshold; or
a feedback moment indicated by the first condition information arrives.

4. The method according to any one of claims 1 to 3, wherein the method further comprises:
determining the first quality of service requirement based on a computing quality of service requirement of the target task and computational power of the at least one compute node.

5. The method according to claim 4, wherein the computing quality of service requirement of the target task or the first quality of service requirement indicates at least one of the following: a computing type requirement, a computing amount requirement, a computing delay requirement, a computing energy consumption requirement, or a computing accuracy requirement.

6. The method according to any one of claims 1 to 5, wherein the method further comprises:
sending a second quality of service requirement to a communication node; and
receiving second feedback information from the communication node, wherein the second feedback information indicates that quality of service provided by the communication node cannot meet the second quality of service requirement; and
the determining the second scheduling result based on the first feedback information comprises:
determining the second scheduling result based on the first feedback information and the second feedback information.

7. The method according to claim 6, wherein the method further comprises:
sending second condition information, wherein the second condition information indicates a condition for triggering the second feedback information.

8. The method according to claim 7, wherein the condition for triggering the second feedback information comprises at least one of the following:
the quality of service provided by the communication node cannot meet the second quality of service requirement;
the quality of service provided by the communication node cannot meet the second quality of service requirement, and a deviation between the two is greater than or equal to a second threshold; or
a feedback moment indicated by the second condition information arrives.

9. The method according to any one of claims 6 to 8, wherein the method further comprises:
determining the second quality of service requirement based on a network status and a communication quality of service requirement of the target task.

10. The method according to claim 7, wherein a communication quality of service requirement of the target task or the second quality of service requirement indicates at least one of the following: a packet delay budget, a guaranteed bit rate, a guaranteed flow bit rate, a maximum data burst volume, a packet error rate, or a guaranteed transmitted data volume.

11. The method according to any one of claims 1 to 10, wherein the method further comprises:
obtaining a network status, a quality of service requirement of the target task, and the computational power of the at least one compute node, wherein the quality of service requirement of the target task comprises the communication quality of service requirement of the target task and the computing quality of service requirement of the target task; and
determining the first scheduling result based on the network status, the quality of service requirement of the target task, and the computational power of the at least one compute node.

12. The method according to claim 11, wherein the obtaining the quality of service requirement of the target task comprises:
receiving a computing service request, wherein the computing service request comprises quality of service requirement information of the target task.

13. The method according to claim 11, wherein the obtaining the quality of service requirement of the target task comprises:
receiving a computing service request, wherein the computing service request comprises a service identifier corresponding to the target task; and
obtaining the quality of service requirement of the target task based on the service identifier.

14. The method according to any one of claims 1 to 13, wherein the method further comprises:
sending the second scheduling result.

15. The method according to any one of claims 1 to 14, wherein the method is applied to a radio access network node, a central unit, a distributed unit, a radio access network intelligent controller, or a core network element.

16. The method according to any one of claims 1 to 15, wherein the first manner indicates the at least one compute node to perform a first subtask in the target task, and the second manner indicates the at least one compute node to perform a second subtask in the target task.

17. A communication method, wherein the method comprises:
receiving a first scheduling result and a first quality of service requirement, wherein the first scheduling result indicates a first manner according to which at least one compute node performs a target task;
performing the target task according to the first manner; and
sending first feedback information, wherein the first feedback information indicates that quality of service in performing the target task according to the first manner cannot meet the first quality of service requirement.

18. The method according to claim 17, wherein the method further comprises:
receiving first condition information, wherein the first condition information indicates a condition for triggering the first feedback information.

19. The method according to claim 18, wherein the condition for triggering the first feedback information comprises at least one of the following:
the quality of service in performing the target task according to the first manner does not meet the first quality of service requirement;
the quality of service in performing the target task according to the first manner does not meet the first quality of service requirement, and a deviation between the two is greater than or equal to a first threshold; or
a feedback moment indicated by the first condition information arrives.

20. The method according to any one of claims 17 to 19, wherein the first quality of service requirement indicates at least one of the following: a computing type requirement, a computing amount requirement, a computing delay requirement, a computing energy consumption requirement, or a computing accuracy requirement.

21. The method according to any one of claims 17 to 20, wherein the method further comprises:
sending a computing service request, wherein the computing service request comprises at least one of quality of service requirement information of the target task or a service identifier corresponding to the target task.

22. The method according to any one of claims 17 to 21, wherein the method further comprises:
receiving a second scheduling result, wherein the second scheduling result indicates a second manner according to which the at least one compute node performs the target task, and the second manner is different from the first manner; and
performing the target task based on the second scheduling result.

23. The method according to claim 22, wherein the first manner indicates the at least one compute node to perform a first subtask in the target task, and the second manner indicates the at least one compute node to perform a second subtask in the target task.

24. A communication apparatus, comprising a unit or module configured to perform the method according to any one of claims 1 to 16, or a unit or module configured to perform the method according to any one of claims 17 to 23.

25. A communication apparatus, comprising a processor, wherein the processor is coupled to a memory, and the memory is configured to store a program or instructions; and when the program or the instructions are executed by the processor, the apparatus is caused to perform the method according to any one of claims 1 to 16 or the method according to any one of claims 17 to 23.

26. A computer-readable storage medium, wherein the computer-readable storage medium stores a computer program or instructions, and when the computer program or the instructions are executed, a computer is caused to perform the method according to any one of claims 1 to 16 or the method according to any one of claims 17 to 23.

27. A computer program product, wherein the computer program product comprises computer program code, and when the computer program code is run on a computer, the computer is caused to implement the method according to any one of claims 1 to 16 or implement the method according to any one of claims 17 to 23.
